(19) **Europäisches Patentamt**

**European Patent Office**

**Office européen des brevets**

(11) **EP 1 315 085 B1**

(12) **EUROPEAN PATENT SPECIFICATION**

(45) Date of publication and mention
of the grant of the patent:
**11.01.2006  Bulletin 2006/02**

(51) Int Cl.:
**G06F 9/44** *(2006.01)*

(21) Application number: **02010132.5**

(22) Date of filing: **10.05.2002**

(54) **Automatic image-button creation process**

Automatisches Verfahren zur Erzeugung von Image-buttons

Procédé de création automatique des boutons d'image

(84) Designated Contracting States:
**DE FR GB**

(30) Priority: **27.11.2001  EP 01128179**

(43) Date of publication of application:
**28.05.2003  Bulletin 2003/22**

(73) Proprietor: **SUN MICROSYSTEMS, INC.**
**Palo Alto, California 94303 (US)**

(72) Inventors:
• **Jahnke, Jörg**
 **22453 Hamburg (DE)**
• **Cordes, Dietmar**
 **21640 Horneburg (DE)**
• **Fuhrmann, Nils**
 **21385 Amelinghausen (DE)**

(74) Representative: **HOFFMANN EITLE**
**Patent- und Rechtsanwälte**
**Arabellastrasse 4**
**81925 München (DE)**

(56) References cited:
**EP-A- 1 014 262**       **US-A- 5 551 055**
**US-A- 5 974 372**

**Description**

BACKGROUND OF THE INVENTION

The present invention relates to providing image buttons in a plurality of languages.

Computers, or more general, data processing devices, become valuable assistants in an ever growing number of fields, where access and/or processing of data is necessary. Applications for data processing devices range from office applications such as text processing, spread sheet processing, and similar to personal applications such as e-mail services, personal communication services and similar. Further examples are banking applications, purchasing or sales applications, information services.

Data processing devices for executing in the above or other applications include any kind of computing device, such as multipurpose data processing devices including desktop or personal computers, laptop, palmtop computing devices, personal digital assistance (PDAs), and mobile communication devices such as mobile telephones or mobile communicators.

Further, a growing number of the above applications today involve communication networks where the individual data processing devices may be at arbitrary locations. Thus, a data processing device involved in providing a service, e.g. a server maintaining data which can be accessed through a communication network, may be located at a first location, while another data processing device obtaining a service, e.g. a client operated by a user for accessing and manipulating the data, may be located at a second location remote from the first location.

In many cases a server, i.e. a data processing device providing a service, is arranged to be accessed from a plurality of clients. For example, a server application may allow users at any location and from virtually any data processing device to access personal data maintained at a server unit or a network of server units. Accordingly, it is possible that users of the clients are located in different language areas or have different language preferences.

For example, a user operating a client could connect to the server unit or network of server units, i.e. using a personal identification information, in order to access data maintained at the server unit or network of server units, such as an e-mail application, a text document or similar. The server in turn would provide certain information to be displayed at the client, allowing the user to access and/or control applications and/or data at the server. This may include the display of a desktop screen, including menu information, or any other kind of information allowing a selection and control of applications and data at the server.

Generally, this information can be displayed at the client using image buttons containing text information. This text information may provide information on a specific function which can be activated when selecting the image button. A selection of the image button may be effected for example by clicking on the image button using a mouse and cursor device or by any other means.

If now a plurality of users access the service from different language areas or have different language preferences, text information of the image buttons must be provided in respective languages understood by each individual user.

This, however, requires that the text elements of the image buttons are provided in different languages. For example, the text elements in the image buttons could be translated into different languages. While this does not pose a problem in case of a small number of image buttons, where a manual translation and creation of the image buttons is possible, a manual translation is not feasible and cost effective in cases for a large number of image buttons must be provided in different languages.

For example, an application provided by the above server unit or network of server units, e.g. an office application or similar, may include a very large number of different menus in different layers including hundreds of individual menu or image buttons. If furthermore the service should be provided in a large number of different language areas, a very large number of translation operations and image creation operations becomes necessary. For example, if an application provides 100 different image buttons containing text elements, and if a translation into 20 different languages is necessary, a total of 2000 translation and image creation operations becomes necessary.

EP 1 014 262 A2 describes a localisation of software products including electronic images captured from foreign sources. In a graphics processing step, screen shots are superimposed on a blank file and edited graphics are superimposed on the screen shots. A translation is performed and the output from translation is used for screen shooting and graphics processing.

SUMMARY OF THE INVENTION

It is therefore desirable to provide image buttons in a plurality of languages at reduced costs.

According to an embodiment, a method for providing image buttons in a plurality of languages includes collecting image text elements of a plurality of image buttons in a first language in a text element file; obtaining translated image text elements for the text element file in at least one second language; obtaining image button information from a template; and effecting creation of an image button for at least one of the text elements in the first and second language. Accordingly, by collecting image text elements in a text element file in different languages, inefficient generation of image buttons without extensive user interaction can be provided.

Advantageously, effecting creation of image buttons may include a graphic application program which is script enabled and wherein effecting creation of an image button includes generating a script to instruct the graphic application program to generate the image button based on given parameters. Accordingly, the creation of the image button may be effected through a graphics application program, e.g. a standard graphics program which is instructed through a script generated based on the given parameters. The given parameters may include the template information and the image text elements.

Advantageously, the method may include generating an input file including at least one image text element, allowing to, e.g. instruct the graphic application, based on at least one image text element.

The input file may further include at least one of the group consisting of: - a language ID; and - a name of an image button file to create.

The graphic application program may be started using the script on a remote server and may be provided with the name of the input file and image button information. Thus, the graphic application program may be operated independently and may be instructed through use of the script to obtain relevant information from the input file.

The image button information may include information related to at least one element of the group consisting of: - image buttons size; image button shape; color; and - position of a text element. Thus, the image button information may include all relevant information on the image button.

Further, an empty image button may be generated based on the template and the translation text element may be merged into the empty image button.

Further, the text element file may include information on an output file name and the image button and information on a template required for the image button creation. Thus, the text element file may also include information needed for suitable further processing and use of the image button generated.

Collecting image text elements may include extracting text elements from at least one image creation file, including position information and image text elements, of a plurality of image buttons in a first language; and the image text elements in the second language may be merged into an image creation file for the second language. Accordingly, the method may provide for extraction of relevant text information from image buttons of an image creation file, e.g. a menu in association with an application program, and may generate the corresponding image creation file with the image buttons having text elements in the second language, e.g. for a user speaking this second language.

Obtaining translated image text elements may include extracting relevant information from the text element file and importing the information into a database. Thus, an improved structure of the translation operation may be provided.

Obtaining the translated image text elements may further include using a web-based tool. Thus, translation services available in a computer network may be employed.

Further, the text element file may be constituted by a XML file and generating the translated image text elements may include a XML editor. Thus, existing tools may advantageously be employed.

The translated image text elements may be merged into the text element file.

Further, a program may be provided having instructions adapted to cause a data processing device to carry out the method of at least one of the above operations. Further, a computer readable medium may be provided, in which a program is embodied, where the program is to make a computer execute the method of the above operation. Still further, a computer program product may be provided, comprising the computer readable medium.

According to another embodiment, a data processing device for providing image buttons in a plurality of languages may include means for collecting image text elements of a plurality of image buttons in a first language in a text element file; means for obtaining translated image text elements for the text element file in at least one second language; means for obtaining image button information from a template; and means for effecting creation of an image button for at least one of the text elements in the first and second language.

Further advantageous features of the invention are disclosed in further claims.

BRIEF DESCRIPTION OF THE DRAWINGS

Fig. 1 shows elements of a system for providing image buttons in a plurality of languages according to an embodiment of the invention;

Fig. 2 shows operations for providing image text elements in a plurality of languages according to an embodiment of the invention;

Fig. 3 shows operations for providing image text elements in a plurality of languages according to an embodiment of the invention, particularly showing operations in connection with providing an input file and instructing a graphic application program;

Fig. 4      shows operations for providing image buttons in a plurality of languages according to an embodiment of the invention, particularly showing operations involving a database of image text elements;

Fig. 5      shows elements of a system for providing image buttons in a plurality of languages according to another embodiment of the invention, particularly illustrating extracting image text elements from an image creation file and merging translated image text elements into an image creation file;

Fig. 6      shows operations for providing image text elements according to another embodiment of invention; and

Fig. 7      shows elements of a system for providing image buttons in a plurality of languages according to another embodiment of the invention.

Fig. 8a      depicts a flowchart of a software localization method according to one embodiment.

Fig. 8b      shows a block diagram illustrating an embodiment of an apparatus for localizing software.

Fig. 9      shows a flowchart of a software localization and related text translation method according to one embodiment.

Fig. 10a      depicts a flow chart of a translation method according to one embodiment.

Fig. 10b      shows a block diagram illustrating an embodiment of an apparatus for translating elements of a source language text.

Fig. 11      depicts a flow chart of a translation method according to another embodiment.

Fig. 12      depicts a flow chart of a dictionary database updating method according to an embodiment.

Fig. 13      depicts a section of a database translation table for the use in the above mentioned embodiment for a translation method.

Fig. 14a      depicts a number of user interaction interfaces according to an embodiment.

Fig. 14b      illustrates a schematically flow diagram according to the user interaction shown in Fig. 14a.

Fig. 15a      depicts a number of user interaction interfaces according to another embodiment.

Fig. 15b      illustrates a schematically flow diagram according to the user interaction shown in Fig. 15a.

Fig. 16      depicts an apparatus for translating texts elements according to another embodiment.

Fig. 17      depicts a sentence based electronic translation dictionary according to another embodiment.

Fig. 18      depicts a network system to be used for software localization according to another embodiment.

## DETAILED DESCRIPTION OF THE PREFERED EMBODIMENTS

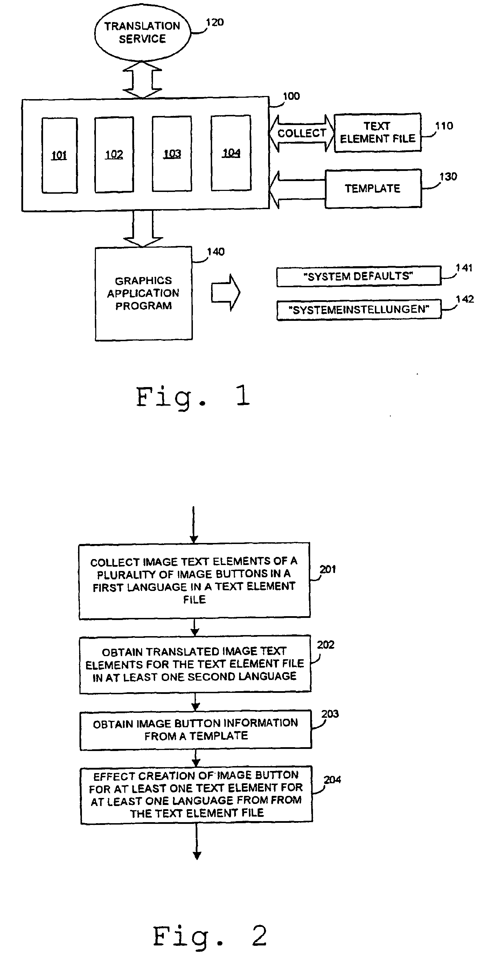

In the following an embodiment of the invention will be described with respect to Fig. 1.

Fig. 1 shows elements of a system providing image buttons in a plurality of languages according to an embodiment of invention. Fig. 1 particularly illustrates how image buttons containing text elements in different languages can be created at reduced complexity and costs.

Fig. 1 illustrates a data processing unit 100 for providing image buttons in a plurality of languages. The data processing unit 100 includes collecting means 101 for collecting image text elements of a plurality of image buttons in a first language in a text element file 110. Further, the data processing unit 100 includes translation means 102 for obtaining translated image text elements in at least one second language, e.g. for the text element file 110. Further, image parameter means 103 are provided for obtaining image button information from a template 130, and graphic command means 104 are provided for effecting creation of an image button for at least one of the text elements in the first and second language.

The embodiment outlined above allows to create image buttons with text elements in different languages with reduced user interaction and at reduced costs. Since the text elements are collected in the text element file 110, an improved handling of the text elements for translation and image button creation is enabled.

The embodiment may advantageously be applied in a client and server scenario where a plurality of client units, operated by users in different language areas or with different language preferences, are used to access service applications at a server unit or groups of server units. A service application may be any kind of application for accessing and/or manipulating data, for example an office application, personal communication applications, text processing applications, banking applications, applications allowing the retail of goods and similar. A service application may reside at a server unit and may be adapted to simultaneously serve a plurality of individual client units. The client units can be used to control execution of the service application, e.g., each client unit may be enabled to control an instance of the service application.

To enable a user at a client unit to control a service application, display screens visualized at the client units may be used. A user may then generate instructions for transmission to the server unit for controlling the service application, e.g. using a mouse and cursor or any other means. The display screens for visualization at the client unit may at least partially be generated by a server and transmitted to a client for local display. The display screen or elements thereon may for example including menu selection items in the form of image buttons which allow a control of the execution of a service application at the server.

The present embodiment facilitates a generation of image buttons for such screen displays wherein the image buttons have text elements with different languages, in order to adapt a service application to the different languages of different users. For example, a first user in a language area with a first language could be provided with display screens having image buttons with text information in the first language, and a second user in a language area with a second language could be provided with a display screen having image buttons with text elements in the second language.

The provision of display screens with text elements in the first language and the second language can be simplified, particularly by collecting the image text elements in the text element file and effecting creation of image buttons for the text elements in the text element file in the different languages.

In the following examples the elements of the system for obtaining image buttons in a plurality of languages will be outlined in further detail. It is noted that the following description constitutes examples for illustration only and should not be construed as limiting the invention.

The data processing unit 100 may be generally any computing device or group of computing devices connected with one another. For example, the data processing unit 100 may be a general purpose computer such as a desktop computer, a laptop computer, a workstation or combinations thereof. Further, the functionality of the data processing unit 100 may be realized by distributed data processing devices connected in a local area network such as a company-wide computer network or may be connected by a wide area network such as the internet, or combinations thereof.

In the following examples of collecting means 101 will be described in further detail.

The collecting means 101 for collecting image text elements of the plurality of image buttons in the first language in text element file may be constituted by a program or a sequence of instructions executed on a central processor or CPU of the data processing unit 100 for effecting a collection of image text elements of the plurality of image buttons in the first language in the text element file. The collecting means may also be realized in hardware or combinations of hardware and software.

Further, the collection means could be adapted to collect image text elements in the text element file involving user interaction, for example involving a user or operator inputting text elements in a first language, such as text elements from image buttons of display screens including menu buttons or similar.

Alternatively or in combination therewith, the collection means 101 could be adapted to extract the text elements from at least one image creation file including position information and image text elements of a plurality of image buttons in the first language. For example, the text elements could be extracted from an image creation file such as a HTML (Hyper Text Markup Language) file or an XML (Extensible Markup Language) file or any other image creation file suitable for interpretation at a data processing device for display.

Thus, the collecting means could automatically extract image button text elements from the image creation file and collect the image text elements in the text element file for further processing. An image creation file can generally be used to create a screen display, e.g. at a client accessing a server application at a server or group of servers.

The collecting means, after the translated image text elements are obtained, could further be arranged to merge the translated image text elements in a second language into an image creation file for the second language. Thus, the image text elements for the image buttons in the second language may be provided in the image creation file for the second language, so that for example a client operated by a user in a language area of the second language may be provided with a display screen including image buttons with text elements in the second language.

This makes present embodiment particularly suitable for application in network environments such as the Internet. The Internet is a network connecting many computer networks and is based on a common addressing system and communications protocol called TCP/IP (Transmission Control Protocol/Internet Protocol).

The original uses of the Internet were electronic mail (e-mail), file transfers (ftp or file transfer protocol), bulletin boards and newsgroups, and remote computer access (telnet). The World Wide Web (web), which enables simple and intuitive navigation of Internet sites through a graphical interface, expanded dramatically during the 1990s to become the most important component of the Internet. The web gives users access to a vast array of documents that are connected to each other by means of links, which are electronic connections that link related pieces of information in order to allow a user easy access to them. Hypertext allows the user to select a word from text and thereby access other documents that contain additional information pertaining to that word; hypermedia documents feature links to images, sounds, animations, and movies.

The web operates within the Internet's basic client-server format; Servers are computer programs that store and transmit documents (i.e., web pages) to other computers on the network when asked to, while clients are programs that request documents from a server as the user asks for them. Browser software allows users to view the retrieved documents. A web page with its corresponding text and hyperlinks is normally written in HTML or XML and is assigned an online address called a Uniform Resource Locator (URL).

The most common way that the information is presented to a user is through a graphical user interface called a web browser. When presented with data in the proper format, the web browser displays formatted text, pictures, sounds, videos, colors, and other data. To instruct a web browser to present the data in the desired manner, hypertext markup language (HTML) was originally used. HTML is a language whereby a file is created that has the necessary data and also information relating to the format of the data.

Further, XML, has emerged as the next generation of markup languages. XML is a language similar to HTML, except that it also includes information (called metadata) relating to the type of data as well as the formatting for the data and the data itself.

Thus, present embodiment can be used to extract text elements from HTML or XML pages or other types of pages, i.e., image creation files, in order to facilitate provision of image buttons in different languages for internationalizing service applications accessible over the Internet or any other network.

In the following examples of the text element file will be described in further detail.

The text element file 100 may be constituted by any kind of collection of image text elements, e.g. stored in a memory section of the data processing unit 100, or stored at any other location.

For example, the text element file could be provided at an external location, accessible from the data processing unit through a communication network. Thus, the text element file can advantageously constitute a centralized resource accessible by a plurality of data processing units such as the data processing unit 100 from arbitrary locations.

Accordingly, a de-central generation of image buttons in various languages becomes possible, including a consistent use of translated image text elements. This allows consistent presentation of text element information to users as opposed to cases where due to different translation operations different translations of image text elements were in use in the same or different service applications.

Collecting image text elements in the text element file may be facilitated by a check-in process, allowing to register image text elements and translations thereof in the text element file, in order to maintain information e.g. on languages the individual image buttons are available.

Advantageously, the text element file may be constituted by an XML (Extensible Markup Language) file and an XML editor may be used for generating the translated image text elements.

Further, the text element file may include information of an output file name of the respective image buttons and information on a template, such as template 130, required for an image button creation. A template may be any kind of collection of image button information. For example, a template may include information related to at least one element of the group consisting of: - image button size; - image button shape; - color; and - position of a text element in an image button. A plurality of templates for various image buttons may be provided and stored in a memory of the data processing unit 100 or at an external location.

Thus, the text element file may also serve as a basis of information allowing a proper handling of the created image buttons and allowing selection of a suitable template for the text elements collected. For example, different types of text elements may be connected to different templates, allowing creation of image buttons in certain categories, e.g. characterized by size, color or any other graphic information. For example, image buttons relate to data handling could be generated using a first template, whereas image buttons allowing a setting of references e.g. for display, may be generated using a second template.

In the following examples of the translation means will be described.

The translation means 102 for obtaining translated image text elements in at least one second language may be constituted by a program or a sequence of instruction to be executed on a central processor of the data processing unit 100, by corresponding hardware or a combination of hardware and software for realizing the functionality of obtaining translated image text elements in the second language.

The translation means may be adapted to extract relevant information from the text element file and may be adapted to import this information into a database for improved handling of the text elements. After obtaining individual text elements, the translation means may invoke a translation service 120 shown in Fig. 1, the translation service providing a translation of the image text element into the second language.

The translation service 120 may involve an internal application, such as a thesaurus provided in a memory unit within or accessible from the data processing unit 100. Further, the translation service may be an external translation service provided by an external application program, e.g. offered by a third party. For example, the translation means may be adapted to invoke a web-based translation tool, accessed through a computer network such as a local area network or the Internet, or a combination thereof.

The translated image text elements may be collected in the database and/or may then be merged into the text element file, e.g. through use of the collecting means 101. Accordingly, the collecting means 101 and the translation means 102 may provide a text element file including text elements in different languages and thus may provide a central information base of image text elements, e.g. for display screen for users in language areas of the respective languages.

In the following examples of the image parameter means 103 will be described.

The image parameter means 103 for obtaining image button information from the template 130 may be realized by a program or a sequence of instructions executed on a central processor of the data processing unit 100, by a corresponding hardware or a combination of software and hardware or realizing the functionality of obtaining image button information from the template.

The image parameter means 103 may be adapted to select and obtain image button information from one of a plurality of templates provided for example in a database of template information. A template could be selected in accordance with instructions or information obtained from the collecting means and/or translation means or from the text element file. The templates may be stored in a memory internal to the data processing unit 100 or may be stored at an external location and template information may be obtained through an internal communication path or may be obtained through an external communication path such as a computer network, including a local area network or a wide area network such as the internet.

The image parameter means, according to another example, may also be adapted to generate image parameters based on information from the collecting means and/or translation means and/or text element file. For example, image parameters could be generated based on a size of a text element, e.g. a length, a category of a text element, as outlined above, or based on any other information for a dynamic generation of image parameters.

The image button information, either dynamically generated or obtained from a template may include information related to at least one of the group consisting of - image button size; - image button shape; - color; and - a position of a text element.

The image button size may specify an area of the image button, for example in a display screen to be displayed at a client unit. Further, the image button size may specify a minimum size of the image button, e.g. to fit the text element. The image button shape information may specify any graphic parameters for obtaining certain graphic effects, such as shading, 3-D effects and similar. Further, the shape may also refer to geometric shapes, such as rectangle, circle and similar.

The image button color may include information related to certain shading of the image button e.g. to obtain further graphic effects. The image button information may further include information on a position of a text element, e.g. in an image button allowing a proper placing of the text element within the image button and/or may relate to a position of the image button in a display screen, as specified in an image creation file, allowing a proper placing of the image button, e.g. in a menu including different image buttons to be displayed at a client unit.

In the following examples of the graphic command means 104 will be described in further detail.

The graphic command means 104 may be realized by a program or a sequence of instructions executed on a central processor of the data processing unit 100 shown in Fig. 1, corresponding hardware, or a combination of software and hardware for effecting creation of an image button for at least one of the text elements in different languages.

The graphic command means 104 may incorporate a graphics module for generating the image buttons. Further, the graphics module may be arranged as part of the data processing unit 100 or may be arranged at an external location, accessed from the graphic command means through a communication link. The graphics application program may be accessed and instructed through any kind of communication link, including internal communication links and a communication network.

The graphics application program 140 may also be a graphics application provided as a stand alone program, e.g. offered by a third party. Further, the graphics application program may be a commercial available graphics application allowing to generate image buttons based on given text elements and given template information. For example, the graphic application program may be constituted by the GNU (Gnu's Not UNIX) image manipulation program GIMP.

The graphic command means 104 may be adapted to instruct a graphics application program, such as the graphics application program 140 shown in Fig. 1, to generate image buttons based on given parameters and may be adapted to generate a script to instruct the graphic application program 140 to generate the image buttons based on the given parameters. If the graphic application program is script enabled, the graphic command means may conveniently instruct the graphic application program based on the parameters. The script may be a sequence of instructions provided to the graphics application program, instructing the graphics application program to generate an image button having certain properties and including a specific text element. Further, the script may include an image text element for insertion into the image button. The script, as known in the art, may be written and intermediately stored in a file and provided to the graphics application program and may include the above parameters, i.e., parameters necessary for generating the image button.

The parameters may include a template and the image text element. For example, the parameters could include image button information as outlined above, including image button size, shape, color and/or position of a text element within the image button.

Moreover, according to another example, the parameters may include a plurality of image text elements and at least one template, allowing a concurrent generation of various image buttons with different image text elements and/or templates.

Each image text element could be associated with a particular template, e.g. specified in the input file, or the image text elements could be categorized in groups, each group associated with a particular template.

Further, the graphic command means 104 may be adapted to generate the input file including at least one image text element, e.g. from the text element file, and the graphic application program could be instructed, using the script, to access the input file in order to retrieve at least one image text element of the input file. The input file could be intermediately stored, e.g. in a memory unit at the data processing unit 100, or at any other location. Thus, the input file may be based on at least a portion of the text element file.

The input file may further include at least one of the group consisting of: - a language identifier; and - a name of an image button file to create. The language ID allows an easier classification of image buttons created based on the text elements, and a name of an image button file to create facilitates generation of graphic elements including the image buttons, such as a display screen for display at a client unit.

By including the name of the input file and the image button information into the script, the graphics application program can access the input file, retrieve the text elements and generate the image button based on the image button information. Alternatively the image button information may be directly included into the input file.

Accordingly, the graphic command means, instructing the graphic application program using the script to read the input file, could provide all necessary information for the image button creation process to the graphic application program.

The graphic command means 104 may be adapted to start the graphics application program or an instance thereof using the script on a remote server and may provide the graphics application program with the name of the input file and image button information. Thus, the graphic application program may be executed on a remote data processing device, e.g. a data processing device with special processing capabilities for graphics applications.

Alternatively or in combination with the above, according to another example, the graphic command means 104 may also be adapted to effect generation of an empty image button based on the template and may be adapted to merge the translation text element into the empty image button. Thus, a collection of empty image buttons may be created, and text elements may be included on demand. This allows generation of a generic image creation file for generating for example a screen display at a client unit. The text elements in the respective languages can then be included into the generic image creation file in order to generate image creation files in different languages.

The graphics application program may generate image button files for storage, e.g. at the data processing unit 100 or at any other location. The image buttons could also be directly included into image creation files for generating e.g. screen displays at client units or image creation files with references to the image button files stored could be created.

As an illustration, Fig. 1 shows to examples of image buttons created using the above outlined features and operations. Image button 141 in a first language, English, shows the English expression "system defaults", and the image button 142 in the second language, German, includes the corresponding German expression "Systemeinstellungen".

The collecting means 101, the translation means 102, the image parameter means 103 and the graphics command means 104 may be included in the data processing unit 100, as shown in Fig. 1. However, it is also possible that these elements are distributed over a plurality of units connected with one another over computer network such as the internet. Further, all other elements shown in Fig. 1, i.e. the translation service, the graphic application, the text element file and the template, may be integrated into the data processing unit 100.

As shown in the embodiment of Fig. 1 and the further examples given above, present embodiment facilitates generation of image buttons having text elements in different languages at reduced user interaction and at reduced costs.

It is noted that a program may be provided having instructions adapted to cause a data processing device to carry out the method of at least one of the above operations. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

In the following a further embodiment of the invention will be described with respect to Fig. 2.

Fig. 2 shows operations of a method for providing image buttons in a plurality of languages according to an embodiment of the invention.

The operations shown in Fig. 2 may be carried out using the system shown in Fig. 1, however, Fig. 2 is not limited thereto.

Fig. 2 particularly shows how image buttons in a plurality of languages can be provided.

The embodiment shown in Fig. 2 may be used to generate screen displays having image buttons with text elements in different languages.

In a first operation 101 image text elements of a plurality of image buttons in a first language are collected in a text element file. The collection operation of image text elements may be operator assisted, e.g., an operator could select text elements for insertion into the text element file and/or, the collection of image text elements may include extracting text elements from at least one image creation file including position information and image text elements of a plurality of image buttons in a first language. The image creation file, as outlined above, could be an HTML or an XML page or any other file which can be used to generate a screen display, e.g. through use of a browser application at a client unit. After translation the text elements in the second language may be merged into an image creation file for the second language.

The text element file, as for example outlined with respect to Fig. 1, may be a collection of image text elements stored in a memory of a data processing unit such as the data processing unit 100 shown in Fig. 1 or at any other location. Further, the text element file may include text elements in different languages and may further include information on a template, on an output file name and similar.

In an operation 202 translated image text elements are obtained for the text element file in at least one second language. The translated text elements may be merged into the text element file or may be maintained at a separate location. For example, text elements could be grouped according to a language identifier and stored in the text element file or in separate text element files for individual languages.

Generating the translated image text elements may include a XML editor allowing to visualizing and improved processing of the XML file. The translation service may be provided by an internal translation program, such as a thesaurus based program, or may utilize a web-based translation service, e.g. as it may be available through a computer network such as the internet.

In an operation 203 image button information is obtained from a template. The template may be any source of image button information, allowing to specify certain parameters of the image button, including image button size, shape, color and a position of a text element of the image button. A plurality of templates may be provided, and image button information may be retrieved from a particular template, e.g. as specified or associated in connection with the text element stored in the text element file.

In an operation 204 an image button creation is effected for at least one text element for at least one language from the text element file, e.g. via graphic command means 104 as shown in Fig. 1. Thus, with the text elements provided in different languages in the text element file, the image button may be created for one or more text elements in one or more languages. Creation of an image button may involve a graphic application program, as outlined above. The graphic application program may be instructed to concurrently generate a plurality of image buttons, e.g. corresponding to text elements in different languages or different text elements in one language, or combinations thereof.

The embodiment is particularly suited to be applied in a server client scenario where, for example, a plurality of users in different language areas access a service application at a server through a plurality of client units. The server could, for example, host a text application, an office application, communication applications and similar for allowing data access and/or manipulation from the client units. The client units could be general purpose data processing devices, including desktop computers, laptop computers, personal digital assistants (PDAs), mobile computing devices including mobile telephones.

The server, e.g. using the operations shown in Fig. 2, may advantageously generate screen displays for different users in different language areas, the screen displays having image buttons including text elements in the languages of the different language areas, or in languages preferred by the users.

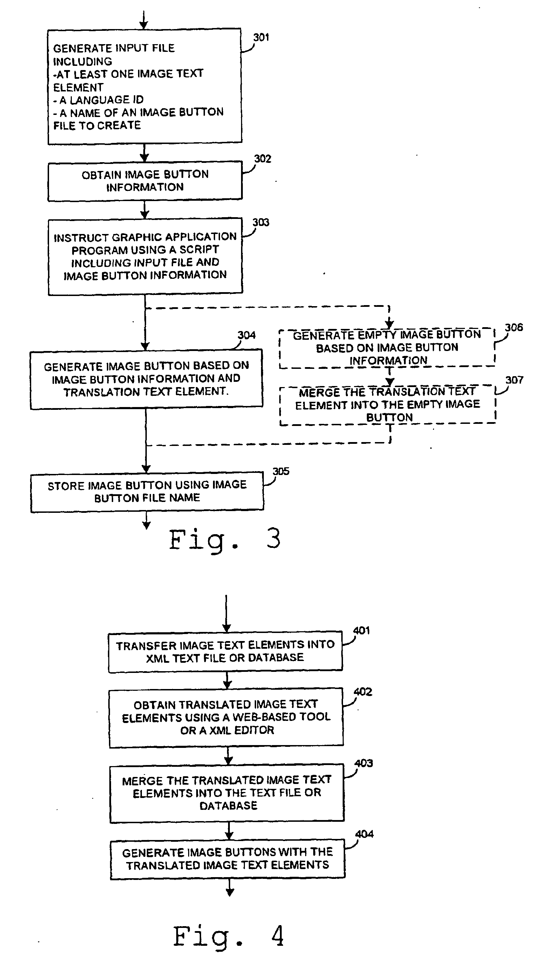

In the following a further embodiment of the invention will be described with respect to Fig. 3.

Fig. 3 shows operations for obtaining image buttons in a plurality of languages according to another embodiment of the invention. The operations of Fig. 3 may be carried out using the system shown in Fig. 1, however, Fig. 3 is not limited thereto.

The embodiment shown in Fig. 3 particularly outlines operations involved in generating image buttons using a graphic application program accessing an input file.

In operation 301 an input file is generated including at least one image text element, and/or a language ID and/or a name of an image button file to create. The input file may have a constitution as outlined above and may correspond to at least part of a text element file described above.

In an operation 302 image button information is obtained, i.e., information on the image button from a template. The image button information may relate to one or a plurality of templates (as required for the image text elements). For example, image button information for different groups of image text elements and/or different languages may be obtained. Obtaining the image button information may also involve dynamically generating image button information based on information from the input file, e.g. a size of an image text element in a particular language and similar.

In an operation 303 a graphic application program is instructed to generate at least one image button, using a script including information on the input file, e.g. a file name or address, and the at least one image button. For example, the script could be used to instruct a graphic application program on a remote server to create an image button based on given parameters. The given parameters may be obtained from the input file and provided with the image button information. Based on the script the graphic application program can access or retrieve the input file from a memory including at least one of image text elements, language IDs and image button file names. Further, the input file could also include the image button information.

In a operation 304 at least one image button based on the image button information and the translation text element is generated. For example, a plurality of image buttons for a particular text element in different languages could be created simultaneously, e.g. if the input file includes one image text element in a plurality of languages. Further, a plurality of image buttons could be created simultaneously for a plurality of text elements in one language. Moreover, a combination of both cases is possible, wherein a plurality of image buttons for a plurality of text elements in a plurality of languages will be created.

Further, a plurality of templates could be employed to generate image buttons for different groups of text elements. The text elements may be classified according to language ID or according to content, in order to be able to make characteristics or appearance of an image button language dependent and/or content dependent. Different templates could be used for each classified group, For example, text elements for data manipulation could be classified into a first group for image buttons with a first appearance, and text elements for setting preferences or similar could be collected in a second group for image buttons with a second appearance.

In an operation 305 at least one image button is stored using the at least one button file name. Preferably, the file names allow a convenient identification of the image buttons in later processing steps, e.g. during generation of image creation files, for example for clients located in different language areas.

According to another example, as an alternative to operation 304, in an operation 306, subsequent to operation 303, an empty image button, i.e. an image button free of a text element, could be created based on the image button information. Thus, image button types for receiving text elements could be created, and in an operation 307 the translation text elements could be merged into the respective empty image buttons. Thus, a library of image buttons could be created and the text elements could be simply merged into the retrieved empty image buttons.

In the following, a further embodiment of the invention will be described with respect to Fig. 4.

Fig. 4 shows operations for obtaining image buttons in different languages according to another embodiment of the invention. The operations of Fig. 4 may be carried out using the system shown in Fig. 1, however, Fig. 4 is not limited thereto.

The embodiment of Fig. 4 particularly outlines operations for efficient handling of text elements and for obtaining translated image text elements.

In an operation 401 image text elements are transferred into a XML text file or a database. Transferring the image text elements may be effected by extracting image text elements from image creation files or from screen displays including image buttons, e.g. for display at a client unit. Transferring the image text elements to an XML file or a database facilitates efficient handling of the text elements. The database may be provided internal to a data processing unit such as the data processing unit 100 shown in Fig. 1, or at any other location. The XML file including the text elements may be visualized for an operator using an XML editor.

In an operation 402 translated image text elements are obtained using a web-based tool or under support of an XML editor. The image text elements may be automatically extracted from the XML text file or database and transferred to the translation service, which returns translated image text elements. Commands for the translation service may include a desired language. The translation service may be a commercially available translation service or a translation service using an application at the data processing unit 100 shown in Fig. 1.

In an operation 403 the translated image text elements received from the translation service are merged back into the XML file or the data base. Accordingly, a collection of different text elements, each of the text elements in different languages, can be provided in the XML file or database.

Thereafter, in an operation 404 image buttons based on the translated image text elements are generated, e.g. as outlined with respect to previous embodiments.

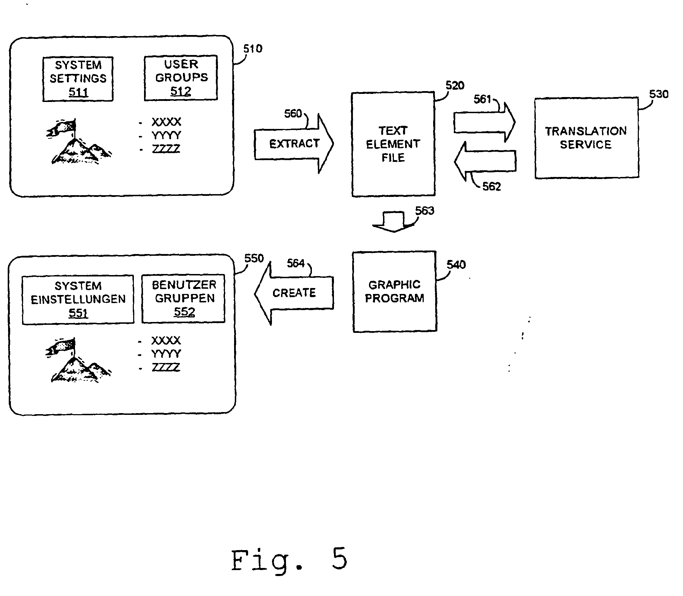

In the following, a further embodiment of the invention will be described with respect to Fig. 5.

Fig. 5 shows elements of a system for generating image buttons in different languages according to another embodiment of the invention. Fig. 5 particularly illustrates extraction of text elements and merging of translated image text elements into image creation files.

As outlined with respect to previous embodiments, the invention may be used to generate screen displays for client unit accessing services at a server. As the client units may be located in different language areas, the service provided at the server must be enabled to generate image creation files or screen displays for the client units in different languages.

Fig. 5 illustrates two screen displays, e.g. based on image creation files, in different languages. A first screen display 510 is considered to include English language image buttons 511 and 512. The image buttons in the present example are used as menu items allowing a control of a corresponding service application at a server. The image button 511 in the present example is assumed to relate to system settings and therefore shows the English expression "system settings". The second image button 512 is considered to relate to user group functionality, and therefore displays the expression "user groups".

An image creation file corresponding to the screen display 510 will preferably be used for users preferring the English language and may thus be provided from the server to corresponding client units having selected English as the preferred language.

The second screen display 550 shown in Fig. 5 shows German language image buttons and therefore is suitable for users in the German language area or users having selected German as the preferred language. Corresponding to the image buttons 511 and 512 of the screen display 510, the screen display 550 includes image buttons 551 and 552. In correspondence to image button 511, the image button 551 includes the German expression "Systemeinstellungen", indicating that the corresponding image button also relates to system functions. Further, the image button 552 corresponding to the image button 512 contains the German expression "Benutzergruppen" and indicates that this image button also relates to a user group functionality.

Obviously, the screen displays may include a larger number of image buttons and/or sub-menus or sub-screens, so that there may well be a very large number of different image buttons to be considered.

In the shown embodiment, the text elements are extracted from the screen display 510 corresponding to the English language and are translated into text elements for the screen display 550 for the German language.

This extraction and creation process may be carried out offline, i.e., image buttons for screen displays in different languages may be created and stored beforehand and made accessible to a service application such as a text processing application or similar.

Further, the extraction and creation process for providing image buttons in different languages may be provided on demand, e.g. if a user with a particular preferred language logs into the server. In this case the screen display, i.e. the image creation file, in the corresponding language including text elements and image buttons in the preferred language can be created dynamically, i.e., on demand.

In Fig. 5, an arrow 560 illustrates a corresponding extraction process allowing to extract the text elements from the image buttons 511 and 512 and provision to the text element file 520. The extraction process may be carried out as outlined with respect to previous embodiments. The text element 520 therefore will contain, in the present simplified embodiment, the expression "system settings" and "user groups". Then, in operations 561 and 562 translated image text elements involving a translation service 530 will be obtained. The translation operation may be carried out as outlined with respect to previous embodiments.

The text element file may include corresponding language identifiers, i.e., showing that the original text elements are in the English language and that required text elements should be in the German language.

After the translation operation, the text element file in the present embodiment will further include the German expressions "Systemeinstellungen" and "Benutzergruppen".

Thereafter, as illustrated by arrow 563, a graphic program 540 is instructed to generate image buttons in the German language, corresponding to the image buttons 511 and 512 in the English language. The creation of the image buttons was outlined with respect to previous embodiments.

As a result of the image button creation process, image buttons 551 and 552 are generated. The image buttons may be checked into a database of image buttons or may be stored intermediately in any other way.

Thereafter, as outlined by an arrow 564, the image screen 550 for display at a client unit or generation of a corresponding image creation file is illustrated.

Accordingly, an English language user accessing a particular service controlled by the screen displays 510 or 550 at the client units can be provided with the English language screen display 510, whereas a German language user may be provided with the German language screen display 550.

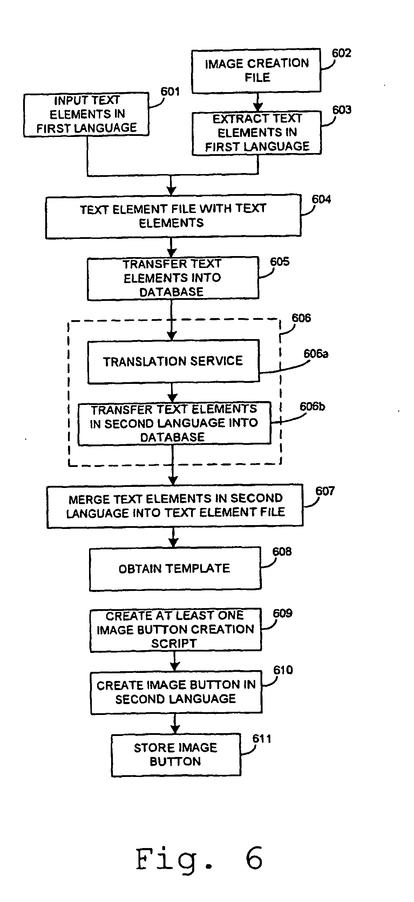

In the following, a further embodiment of the invention will be described with respect to Fig. 6.

Fig. 6 shows operations for obtaining image buttons in a plurality of languages according to another embodiment of the invention. The operations of Fig. 6 may be carried out using the systems shown in Fig. 1 or Fig. 5, however, Fig.

6 is not limited thereto.

In a first operation 601 image text elements in a first language are input. Alternatively, as shown in operations 602 and 603, text elements in a first language can be extracted from an image creation file. Corresponding operations were outlined particularly with respect to Fig. 5.

Following thereto, in an operation 604 a text element file with the extracted text elements is generated.

In an operation 605 the text elements from the text element file are transferred into a database.

A translation service, as shown in operation 606, obtains the text elements from the database in order to provide translation text elements. Operation 606 may include an operation 606a involving invoking a translation service for translating the image text elements in the first language into image text elements in the second language. The text elements in the second language, as shown in operation 606b may then be inserted into the database.

Following operation 606, in an operation 607 the text elements in the second language are merged into the text element file. Thus, the text element file now includes image text elements in the first language and corresponding image text elements in the second language.

In an operation 608 image button information from at least one template is obtained.

Then, in operation 609 at least one image button creation script for image buttons is created. According to one example, a script can be generated for each individual image text element in each particular language. Further, a script for a plurality of image text elements in one language can be generated or script for one image text element in a plurality of languages.

In an operation 610 at least one image button with a text element in the second language is created and stored in an operation 611.

The image buttons can then be used in serving users with different language preferences.

The embodiment outlined above allows to generate a database of image buttons containing text elements in a plurality of languages effectively and at reduced user interaction.

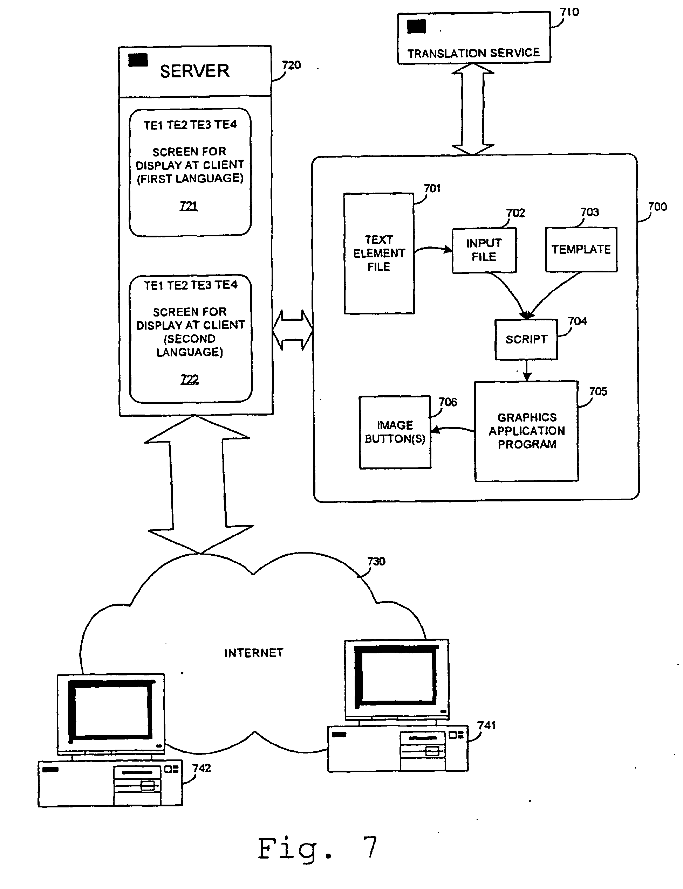

In the following, a further embodiment of the invention will be described with respect to Fig. 7.

Fig. 7 shows elements of a system for obtaining and using image buttons in a plurality of different languages according to another embodiment of the invention. Fig. 7 particularly outlines how the image buttons in different languages can be used to supply users with displays screens in different languages.

Fig. 7 shows a data processing unit 700 for obtaining image buttons in a plurality of different languages.

The data processing unit may be constituted by a single processing device or a plurality of processing devices in communication with one another. The data processing unit 700 includes a text element file 701, e.g. as outlined with respect to previous embodiments. The text element file may be stored in an internal memory or may be provided at an external memory location.

Further, the data processing unit 700 includes an input file 702. The input file, as outlined before, may include at least one image text element, and may further include a language ID and/or name of an image button file to create. The input file may also be stored at an internal location or at any other external memory location.

The data processing unit 700 also includes a template 703 including image button information such as image button size and/or image button shape and/or color and/or a position of a text element within the image button.

The data processing unit 700 may store a plurality of templates at an internal memory location or an external memory accessible from the data processing unit. A suitable template, i.e., the template 703, may be selected based on information contained in the text element file or on information on image parameters obtained from another source. Further, as outlined before, the template may be dynamically generated.

Further, the data processing unit 700 includes a script 704, e.g., as outlined with respect to previous embodiments. The script is preferably generated based on the input file, and may include information of the input file or a reference or storage location allowing access to the input file. Further, the script 704 preferably includes image button information from the template 703.

The script may be intermediately stored at the data processing unit 700 or may be dynamically generated and transferred to the graphics application program 705. The graphics application program 705 may be a graphics application as outlined with respect to previous embodiments, provided at the data processing unit, as shown in Fig. 7, or may be provided at an external location, arranged to be accessed from the data processing unit through a communication link. Based on the script 704, the graphics application program 705 is instructed to generate at least one image button, as outlined with respect to previous embodiments. The image buttons with text elements in different languages, as illustrated by reference numeral 706, may be stored in the data processing unit 700, or may be stored at an external location.

Further, Fig. 7 shows a translation service 710, which may be invoked by the data processing unit 700 in order to obtain translated image text elements, e.g., as outlined before.

Still further, Fig. 7 shows a server 720. The server 720 may provide services to a plurality of users 741 and 742. The services enables users to access and/or manipulate data at the server from remote locations through a client unit. The server may be a large computing device providing services such as office applications, communications applications or any other applications, as outlined above.

Exemplary clients 741 and 742 are arranged to access the server 720 through the Internet, as illustrated at 730, in order to control execution of a service application, as outlined before. As the clients may be located in different language areas, or as users operating the clients may have different language preferences, the application at the server 720 is able to generate image creation files or screen displays for the clients 741 and 742 in different languages.

Fig. 7 illustrates two exemplary screen displays 721 and 722 in a first and a second language. The server provides image creation files to the clients 741 and 742 in the preferred language.

In operation, in order to obtain text elements in a plurality of languages, the data processing unit 700 may be adapted to extract text elements, e.g. from an image creation file corresponding to screen display 721 at the server 720, including text elements in a first language TE1, TE2, TE3, and TE4. The text elements are stored in the text element file 701.

Thereafter, the data processing unit 700 obtains translated image text elements in the second language involving the translation service 710. The translated image text elements may be merged into the text element file.

Thereafter, based on the text element file 701 the input file 702 is generated and, based thereon and on the template 703 the script 704 is generated. Using the graphics application program 705, the image buttons with text elements TE1, TE2, TE3, and TE4 in the second language are then.generated.

Finally, the server 720 uses the image buttons in the various languages to generate image creation files, such as image creation files corresponding to the screen display 721 and 722.

According to another embodiment, a data processing unit for providing image buttons in a plurality of languages may have the following constitution.

1) Data processing unit for providing image buttons in a plurality of languages, including
a code section having instructions adapted to collect image text elements of a plurality of image buttons in a first language in a text element file;
a code section having instructions adapted to obtain translated image text elements for the text element file in at least one second language;
a code section having instructions adapted to obtain image button information from a template; and
a code section having instructions adapted to effect creation of an image button for at least one of the text elements in the first and second language.

2). Data processing unit according to 1), including a code section having instructions adapted to generate a script to instruct a graphic application program to generate the image button based on given parameters.

3). Data processing unit according to 1), including a code section having instructions adapted to generate an input file including at least one image text element.

4). Data processing unit according to 1), including a code section having instructions adapted to start the graphics application program with the script on a remote server and to provide the graphics application program with the name of the input file and image button information.

5). Data processing unit according to 1), including a code section having instructions adapted to effect generation of an empty image button based on the template and merging the translation text element into the empty image button.

6). Data processing unit according to 1), including a code section having instructions adapted to extract text elements from at least one image creation file including position information and image text elements of a plurality of image buttons in a first language, and including a code section having instructions adapted to merge the image text elements in the second language into an image creation file for the second language.

7). Data processing unit according to 1), including a code section having instructions adapted to extract relevant information from the text element file and to import the information into a database.

8). Data processing unit according to 1), including a code section having instructions adapted to invoke a web-based translation tool.

9). Data processing unit according to 1), including a code section having instructions adapted to merge the translated image text elements into the text element file.

In a further embodiment of the invention the graphic application program described in the previous embodiments and examples is constituted by the GNU (Gnu's Not UNIX) image manipulation program GIMP.

In operation the graphic command means for effecting creation of image buttons instructs the GIMP application based on a GIMP call, a GIMP input file and based on GIMP script. Code examples of a GIMP call, a GIMP input file (file name: .utf8.txt) and a GIMP script are given below. Further an example of an XHIL text element file is shown below.

GIMP call with template parameters:

gimp -i -s -c -b "(script-fu-so-button-generator-get-file\"c:\\development\\gimp\\translate.utf8.txt\" \"-*-Arial Unicode MS-*-r-*-*-24-*-*-*-p-*-*-\" 14 '(51 51 102) FALSE 2 0 0 1 TRUE '(192 208 224) TRUE '(51 51 102) '(255 255 255) 0 15 135 1 FALSE 135 16 FALSE FALSE '(0 0 0) 1 1 FALSE 3 FALSE 0 0 32 TRUE)"

GIMP INPUT FILE: (file name: .uft8.txt)

| 1 | d:\web\images\new_user.gif | New Users |
|---|---|---|
| 1 | d:\web\images\en_US.new_user.gif | New Users |
| 3 | d:\web\images\pt.new_user.gif | Novo utilizador |
| 7 | d:\web\images\ru.new_user.gif | Íîâûå ïîëüçîâàòåëè |
| 30 | d:\web\images\el.new_user.gif | Äçìéïõñãßá ÷ñçóôþí |
| 33 | d:\web\images\fr.new_user.gif | Nouveaux utilisateurs |
| 34 | d:\web\images\es.new_user.gif | Nuevo usuario |
| 46 | d:\web\images\sv.new user.gif | Nya användare |
| 48 | d:\web\images\pl.new_user.gif | Nowy u¿ytkownik |
| 49 | d:\web\images\de.new_user.gif | Neue Benutzer |

## GIMP-SCRIPT

```
; Define the function:

(define
    (script-fu-so-button-generator-get-file-wd inFile inQuitGimp)
        (script-fu-so-button-generator-get-file inFile      "-*-Arial Unicode MS-*-r-*-*-24-*-*-*-
p-*-*-*" 20 '(0 0 255) FALSE 0 0 1 1 FALSE '(173 168 145) TRUE '(255 0 0) '(0 255 0) 3 30 114 2
FALSE 120 35 TRUE FALSE '(220 220 220) 3 3 TRUE 3 FALSE 0 0 256 inQuitGimp
        )
)

(define
;    (script-fu-so-button-generator-get-file inFile inQuitGimp)
    (script-fu-so-button-generator-get-file inFile
                                        inTextFont inTextFontSize inTextColor
inTextAntialiasing inTextOffsetX inTextOffsetY inTextAlignX inTextAlignY
                                        inBackgroundTrans inBackgroundColor
                                        inGradientVisible inGradientColor1 inGradientColor2
inGradientOffsetX inGradientOffsetY inGradientSizeX inGradientSizeY
                                        inImageAutoAdjustSize inImageSizeX inImageSizeY
                                        inBorderVisible inBorderTrans inBorderColor
inBorderSizeX inBorderSizeY
                                        inBumpmapUse inBumpmapBeval inBumpmapPressed
                                        inSavePalette inSaveDitherType inSaveMaxColors
                                        inGimpQuit
    )

    (set! theFile (fopen inFile))

    (set! theData ())
    (set! theIndentList ())
    (set! theChar "X")
    (set! theButtonFile "")
    (set! theButtonText "")
    (while (not (equal? () theChar))
    (set! allspaces TRUE)
    (set! theIndent 0)
    (set! theLine "")

    ; while not \n and not EOL
    (while
        (begin
            (set! theChar (fread 1 theFile))
        (and    (not (equal? '\n" theChar))
            (not (equal? () theChar))
        )
    )
        ; do
        (cond
            ; Tab?
            (
                (equal? theChar "\t")
                (set! theChar "")
                    (gimp-message "Tab gefunden")
                    (set! theButtonFile theLine)
                    (set! theLine "")

                (if (= allspaces TRUE)
                    (begin
                        (set! theIndent (+ theIndent ))
                    )
                        ()
                )
            )
            ; Space?
            (
                (equal? theChar " ")
                (if (= allspaces TRUE)
                        (set! theIndent (+ theIndent 1))
```

```
                                                    ()
                                )
                            )
                        (TRUE (set! allspaces FALSE))
                    )
                    (set! theLine (string-append theLine theChar))
                    ;        (gimp-message (string-append 'Line: ' theLine))
                )
                (gimp-message (string-append 'Line: ' theLine))
                (set! theButtonText theLine)
                (gimp-message (string-append 'File: ' theButtonFile))
                (gimp-message (string-append 'Text: ' theButtonText)) .

                (if (= allspaces TRUE)
                        (set! theLine '')
                        ()
                )
                (if (and (equal? () theChar) (equal? '' theLine))
                        ()
                        (begin
                                (set! theData (cons theLine theData))
                                (set! theIndentList (cons theIndent theIndentList))
                        )
                )

                (script-fu-so-button-generator        theButtonFile theButtonText inTextFont inTextFontSize
        inTextColor inTextAntialiasing inTextOffsetX inTextOffsetY inTextAlignX inTextAlignY
                                inBackgroundTrans inBackgroundColor
                                inGradientVisible inGradientColor1 inGradientColor2
        inGradientOffsetX inGradientOffsetY inGradientSizeX inGradientSizeY
                                inImageAutoAdjustSize inImageSizeX inImageSizeY
                                inBorderVisible inBorderTrans inBorderColor inBorderSizeX
        inBorderSizeY
                                inBumpmapUse inBumpmapBeval inBumpmapPressed
                                inSavePalette inSaveDitherType inSaveMaxColors
                                TRUE FALSE
                )
                )


                ; Gimp beenden
                (if (= inGimpQuit TRUE)
                        (begin
                                ; Quit GIMP
                                (gimp-message "Quit!")
                                (gimp-quit 0)
                        )
                        ()
                )
        )


        ; ******************************************************************

        (define
                (script-fu-so-button-generator
                                inFileName
                                inText
                                inTextFont
                                inTextFontSize
                                inTextColor
                                inTextAntialiasing
                                inTextOffsetX
                                inTextOffsetY
                                inTextAlignX
                                inTextAlignY
                                inBackgroundTrans
                                inBackgroundColor
                                inGradientVisible
                                inGradientColor1
                                inGradientColor2
                                inGradientOffsetX
                                inGradientOffsetY
                                inGradientSizeX
                                inGradientSizeY
```

```
                    inImageAutoAdjustSize
                    inImageSizeX
                    inImageSizeY
                    inBorderVisible
                    inBorderTrans
                    inBorderColor
                    inBorderSizeX
                    inBorderSizeY
                    inBumpmapUse
                    inBumpmapBeval
                    inBumpmapPressed
            inSavePalette
            inSaveDitherType
            inSaveMaxColors
                    inBatchMode
                    inGimpQuit
    )

; ************* Init *************

    (set! DisplayMessages TRUE)

    ; alte Fore/Background colors sichern
    (set! old-bg (car (gimp-palette-get-background)))
    (set! old-fg (car (gimp-palette-get-foreground)))

    ; Info ausgeben
    (if (or (= inBatchMode FALSE) (= DisplayMessages TRUE))
        (begin
            (gimp-message " --- ")
            (if (= inBatchMode TRUE) (gimp-message "Batchmode"))
            (gimp-message (string-append "Filename  : " inFileName))         :
            (gimp-message (string-append "ButtonText: " inText))
            (gimp-message (string-append "Font      : " inTextFont))          .
            (gimp-message " --- ")
        )
        ()
    )

    ; Image erstellen
    (set! theImageWidth inImageSizeX)
    (set! theImageHeight inImageSizeY)
    (set! theImage (car (gimp-image-new theImageWidth theImageHeight RGB) ) )

; ************* do *************
    ; add TextLayer
    (if (= DisplayMessages TRUE) (gimp-message "Add TextLayer"))
    (script-fu-so-add-layer-text theImage inText inTextFont inTextFontSize inTextColor
inTextAntialiasing inTextAlignX inTextAlignY inTextOffsetX inTextOffsetY TRUE)
    (set! theTextLayer(car (gimp-image-get-active-layer theImage)))

    ; add BackgroundLayer
    (if (= DisplayMessages TRUE) (gimp-message "Add BackgroundLayer"))
    (script-fu-so-add-layer-background theImage inBackgroundColor inBackgroundTrans TRUE)
    (set! theBackgroundLayer(car (gimp-image-get-active-layer theImage)))

    ; add GradientLayer
    (if (= inGradientVisible TRUE)
        (begin
            (if (= DisplayMessages TRUE) (gimp-message "Add GradientLayer"))
            (script-fu-so-add-layer-gradient theImage inGradientColor1 inGradientColor2
inGradientSizeX inGradientSizeY inGradientOffsetX inGradientOffsetY inGradientVisible)
            (set! theGradientLayer(car (gimp-image-get-active-layer theImage)))
        )
        ()
    )

    ; add BorderLayer
    (if (= inBorderVisible TRUE)
        (begin
            (if (= DisplayMessages TRUE) (gimp-message "Add BorderLayer"))
            (script-fu-so-add-layer-border theImage inBorderColor inBorderSizeX inBorderSizeY
inBorderTrans)
            (set! theBorderLayer(car (gimp-image-get-active-layer theImage)))
```

17

```
                )
                ()
            )

        ; set TextLayer to Top
        (gimp-image-raise-layer-to-top theImage theTextLayer)

        ; merge all visible Layers to FinalLayer
        (if (= DisplayMessages TRUE) (gimp-message "Merge Layers"))
        (set! theFinalLayer (car (gimp-image-merge-visible-layers theImage CLIP-TO-IMAGE)))

        ; use Bumpmap on FinalLayer
        (if (= inBumpmapUse TRUE)
            (begin
                (if (= DisplayMessages TRUE) (gimp-message "Apply Bumpmap"))
                (gimp-selection-all theImage)
                (script-fu-so-apply-bumpmap theImage theFinalLayer inBumpmapBeval inBumpmapPressed)
                (gimp-selection-none theImage)
            )
            ()
        )

        ; save Image
        (if (= DisplayMessages TRUE) (gimp-message (string-append "Save Image: " inFileName)))
        (script-fu-so-image-save-gif theImage inFileName inSavePalette inSaveDitherType
inSaveMaxColors)


    ; ************** Aufräumen **************
        ; alte Farben wieder herstellen
        (gimp-palette-set-background old-bg)
        (gimp-palette-set-foreground old-fg)

        ; Dirty-flag löschen
        (if (= DisplayMessages TRUE) (gimp-message "Clean Image"))
        (gimp-image-clean-all theImage)

        ; Info ausgeben
        (if (= inBatchMode TRUE)
            ()
            (begin
                ; Bild anzeigen
                (gimp-display-new theImage)
            )
        )

        ; Info ausgeben
        (if (= inGimpQuit TRUE)
            (begin
                ; Quit GIMP
                (if (= DisplayMessages TRUE) (gimp-message "Quit!"))
                (gimp-quit 0)
            )
            ()
        )
    )


; ***************************************************************************

; *************** Bumpmap **************
(define
    (script-fu-so-apply-bumpmap inImage inLayer inBeval inPressed)

    (set! theImageWidth (car (gimp-image-width inImage)))
    (set! theImageHeight (car (gimp-image-height inImage)))

    (set! theBumpmap (car (gimp-layer-new inImage theImageWidth theImageHeight RGBA_IMAGE
"Bumpmap" 100 NORMAL)))

    ; Create bumpmap layer

    ;(gimp-image-add-layer inImage theBumpmap -1)
```

18

```
;(gimp-image-lower-layer-to-bottom inImage theBumpmapLayer)
(gimp-palette-set-foreground '(0 0 0))
(gimp-palette-set-background '(255 255 255))
(gimp-edit-fill theBumpmap BG-IMAGE-FILL)

(gimp-rect-select inImage 0 0 inBeval theImageHeight REPLACE FALSE 0)
(blend-bumpmap inImage theBumpmap 0 0 (- inBeval 1) 0)

(gimp-rect-select inImage 0 0 theImageWidth inBeval REPLACE FALSE 0)
(blend-bumpmap inImage theBumpmap 0 0 0 (- inBeval 1))

(gimp-rect-select inImage (- theImageWidth inBeval) 0 inBeval theImageHeight REPLACE FALSE 0)
(blend-bumpmap inImage theBumpmap (- theImageWidth 1) 0 (- theImageWidth inBeval) 0)

(gimp-rect-select inImage 0 (- theImageHeight inBeval) theImageWidth inBeval REPLACE FALSE 0)
(blend-bumpmap inImage theBumpmap 0 (- theImageHeight 1) 0 (- theImageHeight inBeval))

(gimp-selection-none inImage)

(plug-in-bump-map 1 inImage inLayer theBumpmap 135 45 inBeval 0 0 0 0 TRUE inPressed 0)

;(gimp-image-set-active-layer inImage theBumpmap)

)

(define (blend-bumpmap img drawable x1 y1 x2 y2)
    (gimp-blend drawable
                FG-BG-RGB
                DARKEN-ONLY
                LINEAR
                100
                0
                REPEAT-NONE
                FALSE
                0
                0
                x1
                y1
                x2
                y2)))

; ************** Background **************
(define
    (script-fu-so-add-layer-background inImage inColor inTrans inVisible)

    (set! theWidth (car (gimp-image-width inImage)))
    (set! theHeight (car (gimp-image-height inImage)))

    ; Backgroundlayer erstellen
    (set! theLayer (car (gimp-layer-new inImage theWidth theHeight RGBA_IMAGE "Background" 100
NORMAL) ) )
    (gimp-palette-set-background inColor)
    (gimp-image-add-layer inImage theLayer -1)

    ; Backgorund auf Transparent setzen ?
    (gimp-selection-all inImage)
    (if (= inTrans TRUE)
        ; Background transparent
        (begin
            (gimp-edit-clear theLayer)
        )
        ; Background solid
        (gimp-edit-fill theLayer BG-IMAGE-FILL)
    )
    (gimp-selection-none inImage)

    ; Backgroundlayer ausschalten
    (if (= inVisible TRUE)
        ()
        (begin
            (gimp-layer-set-visible theLayer 0)
        )
    )
    (gimp-image-set-active-layer inImage theLayer)
```

```
)

; ************** Gradient **************
(define
    (script-fu-so-add-layer-gradient inImage inColor1 inColor2 inWidth inHeight inOffsetX
inOffsetY inVisible)

    ; Gradientlayer erstellen
    (set! theLayer (car (gimp-layer-new inImage inWidth inHeight RGBA_IMAGE "Gradient" 100
NORMAL) ) )

    ; Farbverlauf erstellen
    (gimp-palette-set-foreground inColor1)
    (gimp-palette-set-background inColor2)
    (gimp-blend theLayer
            FG-BG-RGB
            NORMAL
            LINEAR
            100
            0
            REPEAT-NONE
            FALSE
            0
            0
            0
            0
            (- inWidth 1)
            0
    )
    ; Farbverlaufslayer hinzufügen
    (gimp-image-add-layer inImage theLayer -1)
    (gimp-layer-set-offsets theLayer inOffsetX inOffsetY)

    ; Farbverlauf ausschalten?
    (if (= inVisible TRUE)
        ()
        (begin
            (gimp-layer-set-visible theLayer 0)
        )
    )
    (gimp-image-set-active-layer inImage theLayer)
)

; ************** Text **************
(define
    (script-fu-so-add-layer-text inImage inText inFont inFontSize inColor inAntialiasing inAlignX
inAlignY inOffsetX inOffsetY inVisible)

    ; Textlayer erstellen
    (gimp-palette-set-foreground inColor)
    (set! theLayer (car (gimp-text-fontname inImage -1 inOffsetX inOffsetY inText -1
inAntialiasing inFontSize PIXELS inFont)))

    (set! theImageWidth (car (gimp-image-width inImage)))
    (set! theImageHeight (car (gimp-image-height inImage)))

    (set! theLayerWidth (car (gimp-drawable-width theLayer)))
    (set! theLayerHeight (car (gimp-drawable-height theLayer)))

    ; Text align
    (set! TOP 0)
    (set! LEFT 0)
    (set! CENTER 1)
    (set! BOTTOM 2)
    (set! RIGHT 2)

    (if (and (>= inAlignX 0) (<= inAlignX 2))
        (begin
            (if (= inAlignX LEFT)    (set! theAlignOffsetX 0))
            (if (= inAlignX CENTER)
                (begin
                    (set! theAlignOffsetX (/ (- theImageWidth theLayerWidth) 2))
                    ; correct 6 empty pixel at end of layer
```

```
                    (if (= inAntialiasing FALSE) (set! theAlignOffsetX (+ theAlignOffsetX 3)))
                )
                ()
                        )
                (if (= inAlignX RIGHT)  (set! theAlignOffsetX (- theImageWidth theLayerWidth)))
        )
        (begin
                (gimp-message "Warning: TextAlignX out of bound! Align is set to LEFT.")
                (set! theAlignOffsetX 0)
        )
    )
    (if (and (>= inAlignY 0) (<= inAlignY 2))
        (begin
                (if (= inAlignY TOP)     (set! theAlignOffsetY 0))
                (if (= inAlignY CENTER) (set! theAlignOffsetY (/ (- theImageHeight theLayerHeight)
2)))
                (if (= inAlignY BOTTOM) (set! theAlignOffsetY (- theImageHeight theLayerHeight)))
        )
        (begin
                (gimp-message "Warning: TextAlignY out of bound! Align is set to TOP.")
                (set! theAlignOffsetY 0)
        )
    )

    (gimp-layer-set-offsets theLayer (+ inOffsetX theAlignOffsetX) (+ inOffsetY theAlignOffsetY)
)

    ; Backgroundlayer auschalten
    (if (= inVisible TRUE)
        ()
        (begin
                (gimp-layer-set-visible theLayer 0)
        )
    )
    (gimp-image-set-active-layer inImage theLayer)
)

; ************** Border **************
(define
    (script-fu-so-add-layer-border inImage inColor inSizeX inSizeY inTrans)

    (set! theImageWidth (car (gimp-image-width inImage)))
    (set! theImageHeight (car (gimp-image-height inImage)))

    (set! theImageWidth (+ (* 2 inSizeX) theImageWidth))
    (set! theImageHeight (+ (* 2 inSizeY) theImageHeight))

    (gimp-image-resize inImage theImageWidth theImageHeight inSizeX inSizeY)

    ; Border hizufügen
    (set! theLayer (car (gimp-layer-new inImage theImageWidth theImageHeight RGBA_IMAGE "Border"
100 NORMAL) ) )
    (gimp-palette-set-background inColor)
    (gimp-image-add-layer inImage theLayer -1)
    (if (= inTrans TRUE)
        (begin
                (gimp-edit-fill theLayer TRANS-IMAGE-FILL)
        )
        (begin
                (gimp-edit-fill theLayer BG-IMAGE-FILL)
                (gimp-rect-select inImage inSizeX inSizeY (- theImageWidth (* 2 inSizeX)) (-
theImageHeight (* 2 inSizeY)) REPLACE FALSE 0)
                (gimp-edit-clear theLayer)
                (gimp-edit-fill theLayer TRANS-IMAGE-FILL)
                ;(gimp-layer-set-visible theLayer 0)
        )
    )
    (gimp-selection-none inImage)

    (gimp-image-set-active-layer inImage theLayer)
)

; ************** Speichern **************
(define
```

```
(script-fu-so-image-save-gif inImage inFile inPalette inDitherType inMaxColors)

; Bild umwandeln und als .GIF speichern
;  (gimp-image-merge-visible-layers inImage 1)
;(gimp-image-flatten theImage)


(gimp-convert-indexed inImage inDitherType inPalette inMaxColors FALSE TRUE "")
(file-gif-save 1 inImage 0 inFile "" FALSE FALSE 0 0)
)

; ************** Register the function with the GIMP **************

(script-fu-register
 "script-fu-so-button-generator"
 _"<Toolbox>/Xtns/Script-Fu/SO/so-Button"
 ""
 "Dietmar Cordes (DC)"
 "21.11.2000"
 "Copyright StarOffice GmbH"
 ""
 SF-FILENAME    _"Filename"                                        "FileName.gif"                              ;
Filename
 SF-STRING      "Text"                                             "ButtonText"                                ;
Text
 SF-FONT        _"Schriftart"                                      "-*-Arial Unicode MS-*-r-*-*-24-*-*-*-p-
*-*-*"    ; Font
 SF-ADJUSTMENT _"Schriftgroesse (pixels)"                          '(16 2 1000 1 10 0 1)         .             ;
Font Größe in PIXEL
 SF-COLOR       _"Textfarbe"                                       '(0 0 255)                                  ;
Textfarbe '(RGB)
 SF-TOGGLE      _"Antialising ON/OFF"                              TRUE                                        ;
Antialiasing für Text (ON)/OFF
 SF-VALUE       "Textposition (offset) X"                          "0"                                         ;
Verschobene Textposition (Offset) in PIXEL X
 SF-VALUE       "Textposition (offset) Y"                          "0"                                         ;
Verschobene Textposition (Offset) in PIXEL Y
 SF-ADJUSTMENT _"Align X: LEFT(0), CENTER(1), RIGHT(2)"  '(1 0 2 1 10 0 1)                                     ;
Textpositionierung LEFT/(CENTER)/(RIGHT)
 SF-ADJUSTMENT _"Align Y: TOP(0), CENTER(1), BOTTOM(2)"  '(1 0 2 1 10 0 1)                                     ;
Textpositionierung TOP/(CENTER)/(BOTTOM)
 SF-TOGGLE      _"Hintergrund Transparent ON/OFF"                  FALSE                                       ;
Transparenter Hintegrung (ON)/OFF
 SF-COLOR       _"Hintergrund Farbe"                               '(173 168 145)                              ;
Hintergrungfarbe '(RGB)
 SF-TOGGLE      _"Farbverlauf ON/OFF"                              TRUE                                        ;
Farbverlauf zw. Farbe1 und Farbe2 (ON)/OFF
 SF-COLOR       _"Farbverlauf Farbe 1"                             '(255 0 0)                                  ;
Verlauffarbe1 '(RGB)
 SF-COLOR       _"Farbverlauf Farbe 2 (fuer Verlauf)"             '(0 255 0)                                   ;
Verlauffarbe2 '(RGB)
 SF-VALUE       "Farbverlauf Position (offset) X"                  "3"                                         ;
Verschobene Verlaufposition (Offset) in PIXEL X
 SF-VALUE       "Farbverlauf Position (offset) Y"                  "25"                                        ;
Verschobene Verlaufposition (Offset) in PIXEL Y
 SF-ADJUSTMENT _"Farbverlauf Breite X (pixels)"                    '(94 1 1000 1 10 0 1)                       ;
Breite des Farbverlaufs
 SF-ADJUSTMENT _"Farbverlauf Hoehe Y (pixels)"                     '(2 1 1000 1 10 0 1)                        ;
Höhe des Farbverlaufs
 SF-TOGGLE      _"Buttongroesse Auto ON/OFF"                       FALSE                                       ;
Buttongröße an den Text anpassen (ON)/OFF
 SF-ADJUSTMENT _"Buttongroesse Breite"                             '(100 1 1000 1 10 0 1)                      ;
Buttonbreite in PIXEL (wenn nicht "Size anpassen")
 SF-ADJUSTMENT _"Buttongroesse Hoehe"                              '(30 1 1000 1 10 0 1)                       ;
Buttonhöhe in PIXEL (wenn nicht "Size anpassen")
 SF-TOGGLE      _"Rahmen ON/OFF"                                   FALSE                                       ;
Rahmen (keiner)
 SF-TOGGLE      _"Rahmen Transparent ON/OFF"                       FALSE                                       ;
Rahmen in Transparent
 SF-COLOR       _"Rahmen Farbe"                                    '(0 0 0)                                    ;
Rahmenfarbe
 SF-ADJUSTMENT _"Rahmen Staerke X (pixels)"                        '(1 1 1000 1 10 0 1)                        ;
Rahmen (keiner)
```

```
SF-ADJUSTMENT _"Rahmen Staerke Y (pixels)"              '(1 1 1000 1 10 0 1)                    ;
Rahmen (keiner)
SF-TOGGLE       _"Kanten ON/OFF"                        TRUE                                    ;
Kanten
SF-ADJUSTMENT _"Kantengroesse (pixels)"                 '(3 1 1000 1 10 0 1)                    ;
Kantengroesse
SF-TOGGLE       _"Button gedrueckt ON/OFF"              FALSE                                   ;
Button gedrückt ?
SF-ADJUSTMENT _"Gif Palette: MAKE(0), WEB(2), MONO(3),"              '(0 0 3
1 10 0 1)   ; Gif Palette
SF-ADJUSTMENT _"Gif DitherType: NONE(0), FS(1), FS/LowBleed(2), FIXED(3)"     '(0 0 3 1 10 0
1)    ; Use Dithering for Palette
SF-ADJUSTMENT _"Gif Maximum Colors used"                '(256 1 256 1 10 0 1)                   ;
MaxColors in Plaette
SF-TOGGLE       _"Run in Batch Mode"                    FALSE                                   ;
wenn im Batch mode GUI nicht benutzen
SF-TOGGLE       _"Quit Gimp"                            FALSE                                   ;
Gimp beenden
)

(script-fu-register
"script-fu-so-button-generator-get-file"
_"<Toolbox>/Xtns/Script-Fu/SO/so-Button GetFile"
""
"Dietmar Cordes (DC)"
"21.11.2000"
"Copyright StarOffice GmbH"
""
SF-FILENAME     _"Filename"                             "c:\\testlang\\TestForButton.txt"
; Input-File
SF-FONT         _"Schriftart"                           "-*-Arial Unicode MS-*-r-*-*-24-*-*-*-p-
*-*-*"      ; Font
SF-ADJUSTMENT _"Schriftgroesse (pixels)"                '(16 2 1000 1 10 0 1)                   ;
Font Größe in PIXEL
SF-COLOR        _"Textfarbe"                            '(0 0 255)                              ;
Textfarbe '(RGB)
SF-TOGGLE       _"Antialising ON/OFF"                   TRUE                                    ;
Antialiasing für Text (ON)/OFF
SF-VALUE        "Textposition (offset) X"              "0"                                     ;
Verschobene Textposition (Offset) in PIXEL X
SF-VALUE        "Textposition (offset) Y"              "0"                                     ;
Verschobene Textposition (Offset) in PIXEL Y
SF-ADJUSTMENT _"Align X: LEFT(0), CENTER(1), RIGHT(2)"  '(1 0 2 1 10 0 1)                       ;
Textpositionierung LEFT/(CENTER)/(RIGHT)
SF-ADJUSTMENT _"Align Y: TOP(0), CENTER(1), BOTTOM(2)"  '(1 0 2 1 10 0 1)                       ;
Textpositionierung TOP/(CENTER)/(BOTTOM)
SF-TOGGLE       _"Hintergrund Transparent ON/OFF"       FALSE                                   ;
Transparenter Hintegrung (ON)/OFF
SF-COLOR        _"Hintergrund Farbe"                    '(173 168 145)                          ;
Hintergrungfarbe '(RGB)
SF-TOGGLE       _"Farbverlauf ON/OFF"                   TRUE                                    ;
Farbverlauf zw. Farbe1 und Farbe2 (ON)/OFF
SF-COLOR        _"Farbverlauf Farbe 1"                  '(255 0 0)                              ;
Verlauffarbe1 '(RGB)
SF-COLOR        _"Farbverlauf Farbe 2 (fuer Verlauf)"   '(0 255 0)                              ;
Verlauffarbe2 '(RGB)
SF-VALUE        "Farbverlauf Position (offset) X"      "3"                                     ;
Verschobene Verlaufposition (Offset) in PIXEL X
SF-VALUE        "Farbverlauf Position (offset) Y"      "25"                                    ;
Verschobene Verlaufposition (Offset) in PIXEL Y
SF-ADJUSTMENT _"Farbverlauf Breite X (pixels)"          '(94 1 1000 1 10 0 1)                   ;
Breite des Farbverlaufs
SF-ADJUSTMENT _"Farbverlauf Hoehe Y (pixels)"           '(2 1 1000 1 10 0 1)                    ;
Höhe des Farbverlaufs
SF-TOGGLE       _"Buttongroesse Auto ON/OFF"            FALSE                                   ;
Buttongröße an den Text anpassen (ON)/OFF
SF-ADJUSTMENT _"Buttongroesse Breite"                   '(100 1 1000 1 10 0 1)                  ;
Buttonbreite in PIXEL (wenn nicht "Size anpassen")
SF-ADJUSTMENT _"Buttongroesse Hoehe"                    '(30 1 1000 1 10 0 1)                   ;
Buttonhöhe in PIXEL (wenn nicht "Size anpassen")
SF-TOGGLE       _"Rahmen ON/OFF"                        FALSE                                   ;
Rahmen (keiner)
SF-TOGGLE       _"Rahmen Transparent ON/OFF"            FALSE                                   ;
Rahmen in Transparent
```

```
    SF-COLOR        _"Rahmen Farbe"                          '(0 0 0)                                    ;
Rahmenfarbe
    SF-ADJUSTMENT _"Rahmen Staerke X (pixels)"               '(1 1 1000 1 10 0 1)                        ;
Rahmen (keiner)
    SF-ADJUSTMENT _"Rahmen Staerke Y (pixels)"               '(1 1 1000 1 10 0 1)                        ;
Rahmen (keiner)
    SF-TOGGLE       _"Kanten ON/OFF"                         TRUE                                        ;
Kanten
    SF-ADJUSTMENT _"Kantengroesse (pixels)"                  '(3 1 1000 1 10 0 1)                        ;
Kantengroesse
    SF-TOGGLE       _"Button gedrueckt ON/OFF"              FALSE                                        ;
Button gedrückt ?                                                                          '(0 0 3
1 10 0 1)     ; Gif Palette
    SF-ADJUSTMENT _"Gif Palette: MAKE(0), WEB(2), MONO(3),"
    SF-ADJUSTMENT _"Gif DitherType: NONE(0), FS(1), FS/LowBleed(2), FIXED(3)"         '(0 0 3 1 10 0
1)     ; Use Dithering for Palette
    SF-ADJUSTMENT _"Gif Maximum Colors used"                '(256 1 256 1 10 0 1)                       ;
MaxColors in Plaette
    SF-TOGGLE       _"Quit Gimp"                             FALSE                                       ;
Gimp beenden
)


(script-fu-register
 "script-fu-so-button-generator-get-file-wd"
 _"<Toolbox>/Xtns/Script-Fu/SO/so-Button GetFile (defaults)"
 ""
 "Dietmar Cordes (DC)"
 "21.11.2000"
 "Copyright StarOffice GmbH"
 ""
    SF-FILENAME     _"Filename"                             "c:\\testlang\\TestForButton.txt"
; Filename
    SF-TOGGLE       _"Quit Gimp"                            FALSE                                        ;
Gimp beenden
)
```

## XML text element file:

```
<?xml version="1.0" encoding="UTF-8"?>
<!DOCTYPE OutputDir PUBLIC '-//StarOffice//DTD ResourceBundle 1.0//EN' 'XMLGIF.DTD'>
<OutputDir path="WebApplication.portal.web.html.pics">
    <Template name="caption">
        <OutputFile name="upload_nav.gif">
                <Text xml:lang="de">Hochladen |</Text>
                <Text xml:lang="x-translate">Upload |</Text>
        </OutputFile>
        <OutputFile name="paste_nav.gif">
                <Text xml:lang="de">Einfügen</Text>
                <Text xml:lang="x-translate">Paste</Text>
        </OutputFile>
        <OutputFile name="properties_nav.gif">
                <Text xml:lang="de">Properties |</Text>
                <Text xml:lang="x-translate">Properties |</Text>
        </OutputFile>
    </Template>
        <Template name="clipboard">
            <OutputFile name="fax_clip.gif">
                <Text xml:lang="de">Fax</Text>
                <Text xml:lang="x-translate">Fax</Text>
                <Text xml:lang="en-US">Fax</Text>
                <Text xml:lang="pt">Fax</Text>
                <Text xml:lang="ru">0000</Text>
                <Text xml:lang="el">Fax</Text>
                <Text xml:lang="nl">Fax</Text>
                <Text xml:lang="fr">Fax</Text>
                <Text xml:lang="es">Fax</Text>
                <Text xml:lang="it">Fax</Text>
                <Text xml:lang="da">Fax</Text>
                <Text xml:lang="sv">Fax</Text>
                <Text xml:lang="pl">Faks</Text>
                <Text xml:lang="pt-BR">Fax</Text>
                <Text xml:lang="ja">Fax</Text>
```

```
                    <Text xml:lang="ko">팩스</Text>
                    <Text xml:lang="zh-CN">传真</Text>
                    <Text xml:lang="zh-TW">傳真</Text>
                    <Text xml:lang="tr">Fax</Text>
                    <Text xml:lang="ar">0000</Text>
            </OutputFile>
            <OutputFile name="mail_clip.gif">
                    <Text xml:lang="de">Nachricht</Text>
                    <Text xml:lang="x-translate">Mail</Text>
                    <Text xml:lang="en-US">Message</Text>
                    <Text xml:lang="pt">Mensagem</Text>
                    <Text xml:lang="ru">00000000</Text>
                    <Text xml:lang="el">00000</Text>
                    <Text xml:lang="nl">Bericht</Text>
                    <Text xml:lang="fr">Message</Text>
                    <Text xml:lang="es">Mensaje</Text>
                    <Text xml:lang="it">Messaggio</Text>
                    <Text xml:lang="da">Meddelelse</Text>
                    <Text xml:lang="sv">Meddelande</Text>
                    <Text xml:lang="pl">Wiadomość</Text>
                    <Text xml:lang="pt-BR">Message</Text>
                    <Text xml:lang="ja">メッセージ</Text>
                    <Text xml:lang="ko">메시지</Text>
                    <Text xml:lang="zh-CN">电子邮件</Text>
                    <Text xml:lang="zh-TW">電子郵件</Text>
                    <Text xml:lang="tr">Message</Text>
                    <Text xml:lang="ar">00000</Text>
            </OutputFile>
            <OutputFile name="print_clip.gif">
                    <Text xml:lang="de">Drucken</Text>
                    <Text xml:lang="x-translate">Print</Text>
                    <Text xml:lang="en-US">Print</Text>
                    <Text xml:lang="pt">Imprimir</Text>
                    <Text xml:lang="ru">000000</Text>
                    <Text xml:lang="el">0000π000</Text>
                    <Text xml:lang="nl">Afdrukken</Text>
                    <Text xml:lang="fr">Imprimer</Text>
                    <Text xml:lang="es">Imprimir</Text>
                    <Text xml:lang="it">Stampa</Text>
                    <Text xml:lang="da">Udskriv</Text>
                    <Text xml:lang="sv">Skriv ut</Text>
                    <Text xml:lang="pl">Drukuj</Text>
                    <Text xml:lang="pt-BR">Print</Text>
                    <Text xml:lang="ja">印刷</Text>
                    <Text xml:lang="ko">인쇄</Text>
                    <Text xml:lang="zh-CN">打印</Text>
                    <Text xml:lang="zh-TW">列印</Text>
                    <Text xml:lang="tr">Print</Text>
                    <Text xml:lang="ar">00000</Text>
            </OutputFile>
        </Template>
    </OutputDir>
```

A further embodiment relates to database application methods and programs for localizing software, translating texts contained therein and to support translators in localizing software and translating texts. It also relates to a translation apparatus for localizing software, translating texts and supporting translators.

Conventional translation programs try to translate texts on a "sentence by sentence" basis. Such conventional translation programs encompass the analysis of the grammatical structure of a sentence to be translated and the transfer of it into a grammatical structure of a target language sentence, by searching for grammar pattern in the sentence to be translated. The text to be translated can also be called the source language text. This is usually done by analyzing the syntax of the sentence by searching for main and subordinate clauses and so on. For this purpose the single words of the sentence have to be analyzed for their attributes, just like the part of speech, declination, plural, case and the like. Further, conventional translation programs try to transform the grammatical form from the source language grammar to the target language grammar, to translate the single words and insert them in the transformed grammatical form. If the translation program works correctly, the translated sentence exactly represents or matches the sentence to be translated. One difficulty is that the translation of many words in the text to be translated is equivocal and represents many different words in the target language. Therefore, as long as translation programs cannot use thesauruses specifically adapted for detecting the correct semantical expressions and meaning of sentences, according to the context, machine translations are imperfect.

Another drawback of the above mentioned translation programs is that especially slang and slang grammar is not translatable, as slang uses grammar rules different from the standard grammar rules. Additionally the complex grammar rules are difficult to describe with mathematical laws and therefore require huge calculation costs even for simple sentences. Additionally, ambiguous source language sentences are especially difficult to translate into target sentences with the same ambiguous grammar structure.

Another drawback of the conventional translation programs is the fact that the translation performance is limited, and stays limited, and except of update options for the dictionaries and the grammar rules, the conventional translation programs are limited in their performance. Conventional translation programs are not adaptive, and repeat the same translation errors, as the user cannot change the grammar rules by himself without risking a total breakdown of the translation apparatus.

Another problem is connected with software localization, i.e. the adaptation of software to a certain local, geographic or linguistic environment in which it is used. Such a localization must be done with internationally available software tools in order to ensure proper function with users coming from different cultural and linguistic backgrounds. Such problem is also related to the fact that different translators work simultaneously on different aspects of a software. So e.g. one team translates the text entries in a source code of a software, another team translates the manuals, while a third team translates the "Help" files. To achieve a correct localized version of a software it is beneficial that the three teams have to use the same translations for same words so that the manuals, "Help" files, and the text elements in the software itself consistently match each other. To achieve this, the teams conventionally have to lay down the keywords and the respective translations used in the software. This is time consuming and requires a good communication between the teams.

It is desirable to have a method, program and device which is capable to translate, or support translators, in localizing software and software related texts with low calculation requirements, a reasonable exploitation of synergistic effects and the capability of consistent translation in both the software and the related text parts, such as manuals, Help files and so on.

It is further desirable to have a method, program and device which is capable to adapt the text translations of software related texts even to an unusual use of grammar and words.

It is further desirable to have a method, program and device which is capable to localize software and/or to support people in localizing software.

According to an embodiment a method for localizing software is provided. The method localizes the software by adapting the language of texts in a source code of said software by extracting text elements from the source code. Next, untranslated text elements are searched in said extracted text elements. Translation elements are retrieved for each untranslated text element, e.g. by searching a database with pre-stored matching source text elements and respective translations. The next operation is related to associating said searched untranslated element of the source language with said retrieved translation elements, if such translation elements are found.

In this embodiment the method supports a software localizer (or user) by offering one or more possible translations of a text element contained in the source code of a software program. In this way the user can simply perceive the translation proposals retrieved from a database. The method ensures the adaptability of different software to certain cultural, geographic or linguistic environments.

In another embodiment the method further comprises the operations of validating said retrieved translation elements, and merging said source code with said validated translation elements.

With these steps the user can easily decide if he wants to accept (validate) or discard the suggested translation. The validation of the suggested translation may be executed automatically, if the user has validated the same translation element in another section of the source code. Merging the source code with said validated translation elements, finally indicates the enlargement of the one language text elements in the source code with the validated other language(s) translation elements. The merging may be executed preferably after translation of the whole text.

In another embodiment, the method further comprises a compiling operation to compile said merged source code to generate a localized software in binary code. This software preferably comprises one or more text libraries in languages different from the language of the original source code. The operation of compiling can be the last operation in the generation of a localized software version, dependent on the programming language. Preferably an additional operation of binding may be executed when the programming language requires the binding of sub-modules or sub-li-

braries after compilation. In this case the compiling operation is followed by one or more binding operations. Dependent on the programming language, the operation of compiling can be an assembling operation.

In another embodiment, the method for localizing software further comprises an adaptation of the language of texts related to said software, e.g. manuals, Help files, etc. for illustrating the use of said software and supporting the user accordingly. Software is often provided with additional texts such as "Help"- files, manuals, packaging prints and the like, these texts being provided with translations matching with the translations used in the source code of the software. The translation of software related texts may be executed by the additional operations of: searching untranslated elements of the software related text, retrieving translation elements for each untranslated text element of the software related text on the basis and in accordance with the association of said retrieved source code translation elements, and associating said untranslated elements of the software related text with said retrieved translation elements. Thereby it is ensured that a consistent translation is performed within both the translation of source code texts and of software related texts.

It is to be noted that the operation of retrieving translation elements for each untranslated text element of the software related text on the basis of the association of said retrieved source code translation elements may include that said associated source code translation elements may have been previously validated, merged or even compiled, with a preference on the validated entries.

It is to be noted, that the operations of the method for localizing software and translating software related texts can be executed successively, interleavingly and/or even simultaneously. The method may be executed in a local area network (LAN), wherein different teams of translators access and/or retrieve the translation suggestion from the same table and/or dictionary and/or library and/or storage unit. To simplify the access and to standardize the translation of a software, the storage unit may be related to a single language software localization, i.e. there is one translation sub-dictionary for each language in the localized software version. This feature may be combined with a composed translation dictionary structure, so that a number of keywords are stored in and retrieved from a localization specific database, by which keywords of minimum requirements are defined. Text elements not containing said keywords can be retrieved from a common database.

According to another embodiment a method for localizing software related texts is provided by which - dependent on or irrespective from the translation of software source code - text elements are translated. The method utilizes text elements of said software related text and their respective translations stored in a database. First, all untranslated text elements are searched in said software related text. Next, translation elements are retrieved for an untranslated text element, e.g. by searching a database with pre-stored matching source text elements and respective translations. Associating said searched untranslated element of the source language with said retrieved translation elements is done, if and after such translation elements are found.

In this embodiment the method supports a translator by offering one or more possible translations of a source text element. The user or translator can easily decide if he wants to accept or discard the suggested translation. The main difference to conventional translation programs is that the grammar of the source text element is not checked. This is not necessary, as only the text structure of the source language has to match a previously translated text element. It is like using an analphabet for comparing a pattern (the source text element) with previously stored patterns, in a card index and attaching a respective file card (with the translation element) at the place the pattern was found in the source text. Then a translator can accept or discard the index card, instead of translating each text element by himself, thereby improving his translation speed. The performance of the pretranslation is therefore only dependent on the retrieving speed of the file card and on the size of the card index, and not on the linguistic abilities of the user performing the translation. In another embodiment two or more users may sweep the card index the same time. Additionally, in another embodiment, the users can take newly written index cards from another user and sort them into the card index.

In an embodiment the associating is executed by entering said retrieved translation elements into a table. The use of tables will simplify the processing of the text elements and enables the developers to use database management systems (DBMS) to realize this embodiment in a computer. The use of tables can further simplify the access of retrieved translation elements, if they are retrieved from a database.

The use and the interaction of tables in a database are well known and easy to handle tasks in databases, especially if the tables comprises pre-defined translated phrases compared to an ambiguous grammar analysis. The transfer to tables of a database offers additional benefits, as comments, markings and even translation related background information, like language code, translation code and the like can be stored in additional columns in the table. With the "patterns" stored in columns the job of users performing the translation in above example is simplified by just taking the next pattern in the column, and no longer searching for the next patch in a patchwork.

According to another embodiment, the operation of retrieving translation elements comprises the operation of comparing each untranslated text element with entries of a dictionary database.

According to another embodiment, the received translation element is entered in at the location of said untranslated text element or in proximity of said untranslated text element. So the translated element may replace the untranslated text element. The translated element can be placed below the untranslated element. The translated element can e.g. be entered in a field element adjacent to the field element of an untranslated text element, if a table is used for the translation method.

According to another embodiment a translation method further comprises displaying of matching translation elements to a user, and waiting for user input indicating a validation of a specific matching translation element. The validation can be executed by a user entering a valid translation element by himself.

According to another embodiment the translation method further comprises a operation of editing said received translation element, by user input, prior to said validation.

The user can accept or discard entries in the pretranslation table by interaction. The interaction with a user includes different advantages. First a user can decide by himself if he wants to accept the proposed entry. Second, if multiple entries are proposed the user can select the best one, or even select one of the proposed lower rated translation suggestions and adapt it to the present text to be translated. The user can choose if he wants to select one of the proposed translation elements in the pre-translation table, or if he wants to translate said text element by himself.

According to another embodiment, the translation method comprises updating said dictionary database with said validated translation element. By updating the database with new text elements and translation entries the database is extended and improved. This extension can be executed automatically e.g. by automatically updating the dictionary database with the validation of a translation element. The updating of the database can be executed according to different procedures. In one embodiment, the database updating can be executed by transferring all validated translation elements from the user device to the database, so that the database itself can decide if that validated translation element is already stored, or is to be stored as a new translation element. In another embodiment, the updating of the database may be executed by transferring only newly generated database entries to the database. It may be noted that it may be advantageous that a user, a user device, or the database checks if a validated text element/translation element pair is already present in the database, to prevent a rising number of similar or identical entries which must be avoided. To prevent that invalid translation elements can be dragged into the translation database, the updating of the translation database may even be accomplished by an additional validation process initiated from a second translator. The second validation can easily be executed, as the translator for the second validation only has to decide if a translation element matches the respective text element or not. It can also be possible to discard certain translation proposals as invalid by a user input, to prevent that the system offers this translation element a second time. This feature can be embodied as a "negative key ID"- entry in a certain column of the translation table.

According to another embodiment, an index is generated in an additional operation indicating the grade of conformity of an element of the text and of the dictionary database. This index is useful, if the text element to be translated and the text entries stored in the database differ only slightly, so that a translator may easily derive a correct translation from a slightly different database entry. The depiction of an index describing the matching of an untranslated text element and a translated text element can be described as fuzzy matches. The generated index may be described as a "fuzziness" index of the matching element.

According to a further embodiment, the number of entries in the said pretranslation table of one text element is related to the grade of matching. The number of matching translations to be retrieved from the translation database has not been limited until now, so that more than one matching entry of the database may be retrieved. If more than one entry can be found, the number of retrieved entries may be limited to a predetermined value of the matching grade index. Alternatively, the number of retrieved database entries could be limited by a predetermined value. Both limits prevent that a human translator has to face a too big number of translation proposals. The number of translation proposals can be limited by a predetermined value e.g. of the matching index. If the predetermined matching index is set to zero, the user in the above example would retrieve the whole database for each source text element in the table.

In another embodiment, a translation entry of the source language text element entry is accepted as valid translation automatically, if said index indicates an exact match of said untranslated text element with said source language text element entry. This option automates the above mentioned translation support method to an automatic translator for text elements with exactly matching database entries. This automatic translation method may even economize the translator, if the texts to be translated are limited to a small lingual field combined with a huge database. Huge databases suggest a centralized use of the translation method in computer networks such as local area networks or the internet. This would enable a fast generation of a huge universal translation database, if any net user can access the database for translation tasks improving the database with each accepted translation. To prevent abuse of the database the entries may be marked as authorized by the translators of the provider.

According to a further embodiment, the method comprises a marking operation of translated or untranslated or partially translated text elements. The markings can be used to indicate the status of the translation, distinguishing between different grades of translations e.g. fully, partially, or untranslated. The makings may be incorporated in the text, or may be added in a separate column into the translation table. The makings can be used to indicate if the specific table entry has been translated by a translator, or is an automatically generated proposal, and the like. The markings are especially useful, if the front-end used by the translator depicts the table entries as a conventional text without a visible table structure. The markings can be colored text, colored background, bold or oblique depiction of the text, bold or colored tables or frames and the like.

Markings of the table entries may indicate e.g. a number of how often this database entry has been used or has been accepted by a translator. The markings may indicate e.g. the differences between the translation suggestion and the actual text, to simplify the work of the translator. The marking may mark a single word differing in the database entry and in the translation. The marking may indicate the quality of the suggested translation. The marking may even indicate the similarity to pre-translated database entries, so the user may recognize if the user selected an unusual grammar or word translation. A marking can be applied to the source text, indicating a grammar structure, so that e.g. the main clause is marked with one color and the subordinate clauses in another color. Or the flexion of subordinate clauses to words in the main sentences may be indicated.

According to another embodiment, the text elements are texts. Whole texts or text sections or paragraphs include the advantage of fast translation if such a paragraph can be found in the database. The expected drawback, that whole texts stored in a database would exceed the limits of any database can be ignored, as most translations especially of technical texts or of letters include few but very similar text sections. These sections can be e.g. addresses, warranties, terms, "Help" files, conditions of trade and the like.

According to a further embodiment, the text elements are sentences. The text elements can be whole sentences or main and subordinate clauses, or simply phrases, depending on the selection of the single text element. The longer the text element is the better the translation can be expected to be, and the bigger the related database is. It could be expected that the sentence is an ideal text element, and this is the shortest logically independent language unit. The use of main and subordinate clauses may be used especially in translations from English to Japanese or from French to German to simplify the correct use of pronouns and reflexives.

In another embodiment, the text elements are words. This would be easy to implement even in relatively small databases, for supporting a translator in translating a text by providing the translations of the single words of a sentence in the source language text. Even big translation dictionaries can be stored in relative small storage mediums. The person using this feature only has to select the correct translation of the proposed word translation and adapt the grammar of the source language to the target language, thereby rendering the use of dictionaries obsolete. The dictionary function can be combined with the above mentioned index feature, indicating how often a special translation has been selected.

It is to be noted that the single text elements could be stored in any logical form in the database. For example a text may be present as a tuple of key identification numbers of sentences, and/or the texts and sentences may be present as a tuple of key identification numbers of words and/or grammar reference. The texts, words and/or may be present as single texts in the database. The structure of the conceptual level or the internal level of the database is not important for the method.

According to another embodiment, the various above mentioned text elements are combined to a single translation method. In this method the database is first searched for text sections, then for sentences and finally for words. The three searches may be executed successively with or without intermediate user interactions. In the first case the user first checks the suggested text sections, then the computer searches for translations of sentences, to be checked by the user and finally, searches for single words to be finally checked by the user. The computer may successively check the three hierarchic levels of text elements, preferably only continuing in a lower hierarchic level if no suggestion has been found in the higher hierarchic level, leading to a mix of suggested text section-, sentence- and word translations. To clarify such a mix of suggestions a front-end of the translation support program may mark the hierarchic level of the suggested translation. It can be compared with cutting down a groove: You can first cut all trees, then cut all branches, or you could cut down each tree, cut its branches, cut down the next tree, and so on. Equally the translation program may first compare all text sections with the database, then all sentences, and next all words, or may compare a text section, next compare all sentences of said text section, if the text section could not be found in the database, continuing by checking the database for all sentences in that text section, and continuing by searching all words in the database of sentences that could not be found in the database. The search for text sections or for words may be economized. With these combined features a translator can easily utilize a database to generate a pretranslation simply and fast relieving him of the duty to thumb dictionaries and grammar books for translating.

According to another embodiment a method for localizing software, translating texts, or supporting the translation of texts, further comprises processing of text elements and translated text elements stored in said database. The processing can be a preprocessing to transfer an arbitrary source text to a database table, including such operations as converting different text files to a file format used in the database to simplify the retrieving of matching database entries. Similarly, a translated text in the database can easily be transformed to an arbitrary file format. The transfer of the text to a table requires splitting the source text to single text elements. The processing can be a post processing e.g. by applying statistics to extract translation rules. By means of statistics, analyzing e.g. the behavior pattern of a user, a translation device may be enabled to translate sentences by itself. So the method may comprise analyzing the user input, on a certain difference patterns, of source text and database entries, enabling the method to generate translation suggestions assembled from database entries and user input patterns. The method may further comprise transferring operations texts to and from a database. This offers multiple and useful options. With this option the pretranslation of the source code text can be simplified as the source code text can be entered as text elements in a database compatible form, i.e. a table.

According to another embodiment, a method for localizing software, translating or supporting translations further comprises the operation of sorting said text elements. A sorting operation could be performed prior or posterior to the generation of translation suggestions. So, a user may sort the text elements e.g. of the source text in an alphabetic order, sort the source text for certain "keywords", and the like. A special application of a sorting operation can be to sort the sentences according to grammar structures, the length of sentences or the number of words or characters used in a sentence. By sorting grammar structures, the method can be used to simplify the translation and the use of the method. The simplification resides in the fact that the translator starts e.g. with simple grammar structures working himself through to the complex grammar structures. This enables a user to practice with simple sentences to be prepared for complex sentences. The user may adapt the order of the sorting e.g. by transferring a text element to the end of a sequence in the order.

According to another embodiment a software tool for enabling and/or supporting a user in translating of texts or localizing of software is provided. The software tool comprises program code portions for carrying out the operations of the above mentioned methods, when said program is implemented in a computer program. The software tool can be implemented e.g. in a database management program (DBMS) to offer the user additional translation features. The software tool can be implemented into a translation program to offer a combination of the features from conventional features and features according to the described embodiments. The combination of a conventional translation program and a program according to the present examples would enable a user to use an intelligent and adaptive translation program, the performance of which increases with the number of translated sentences. A combination of a conventional translation program and an embodiment may utilize an additional grammar filter, to check e.g. the source text and the user input to prevent errors in the translation, and to improve the quality of a translation by marking the translated passage in the text with an "equivocal source text"- mark.

According to another embodiment a computer program for enabling and/or supporting a user to translate texts from a source language or localizing software by means of a database, comprises program code section for carrying out the above operations of the above methods when said program is run on a computer or a network device.

According to a further embodiment a computer program product is provided comprising program code sections stored on a computer readable medium. The computer program code sections are for carrying out the above mentioned translation and software localization method when said program product is run on a computer or network device.

According to yet another embodiment a computer device for executing software localization, translation or translation support tasks is provided. The computer device is programmed for carrying out the above mentioned translation methods. Said computer device could be a network connected in and an output device transferring source language texts via a network to a centralized translation database. This computer device can be a database device for translation purposes. The device may be equipped with a scanner.

According to another embodiment an apparatus for localizing software by adapting the language of text contained in a source code of the software is provided. The apparatus comprises a component for extracting text elements from the source code, a component for searching untranslated elements of the extracted text elements, a component for retrieving translation elements for each untranslated text element and a component for associating the untranslated elements of the source code with the retrieved elements. The component for retrieving translation elements may be a component for searching translation elements within a database with pre-stored matching source text elements and respective translations. The component for associating the searched untranslated element of the source language with the retrieved translation elements is operated if such translation elements are found. Otherwise the searching operation is continued or the user is informed.

According to another embodiment of the present innovation an apparatus for localizing software related text by adapting the language of the text is provided. The apparatus comprises a component for searching untranslated elements of the extracted text elements, a component for retrieving translation elements for each untranslated text element and a component for associating the untranslated elements of the source code with the retrieved elements. The component for retrieving translation elements may be a component for searching translation elements within a database with pre-stored matching source text elements and respective translations. The component for associating the searched untranslated element of the source language with the retrieved translation elements is operated if such translation elements are found.

According to another embodiment an apparatus for translating texts elements by means of a database, comprises:

- a module to communicate with said database,
- an interface for exchanging data,
- a processing device for retrieving elements from said database.

According to another embodiment the apparatus further comprises a dictionary database.

The apparatus can be a network device communicating via said network with a database and a user or terminal device for user input. The apparatus can comprise a built-in or an external database. The apparatus can be a network device, a terminal device, an independently operable user translator. An independently operable user translator may comprise a scanner to simplify the transfer of the source text to the translator. The scanner may be able to perform screenshots of a user device, so that a user may be able to translate sentences depicted on a computer or television monitor. This would offer e.g. an "instantaneous subtitle translator" for the use with a TV.

The dictionary database provided can contain the data of a sentence based dictionary. The database, especially a database containing a sentence based translation dictionary can be applied in translation devices, or to extend the abilities of an existing conventional translation device.

The apparatus can be a sentence based dictionary for translation purposes. The difference to conventional dictionaries is that the translated units are not words and but whole sentences. It is apparent that such a dictionary, if printed as a conventional book may be larger than the "encyclopedia Britannica" and could appear a bit bulky, but would require only a single access per sentence, without the need of checking the grammar. The dictionary is incorporated in an electronic book, simplifying the access, and reducing the weight and improving the user interface of the dictionary. Said electronic dictionary may even comprise a scanner for simplified source language text input.

Another embodiment provides a network system for enabling and/or supporting at least one user to localize software by translating texts in said software by means of a database. The network system comprises at least one of the aforementioned translation or software localization apparatuses, and at least one translation database for exchanging data with said at least one apparatus. The software to be localized can be transferred to the apparatuses via the network, too.

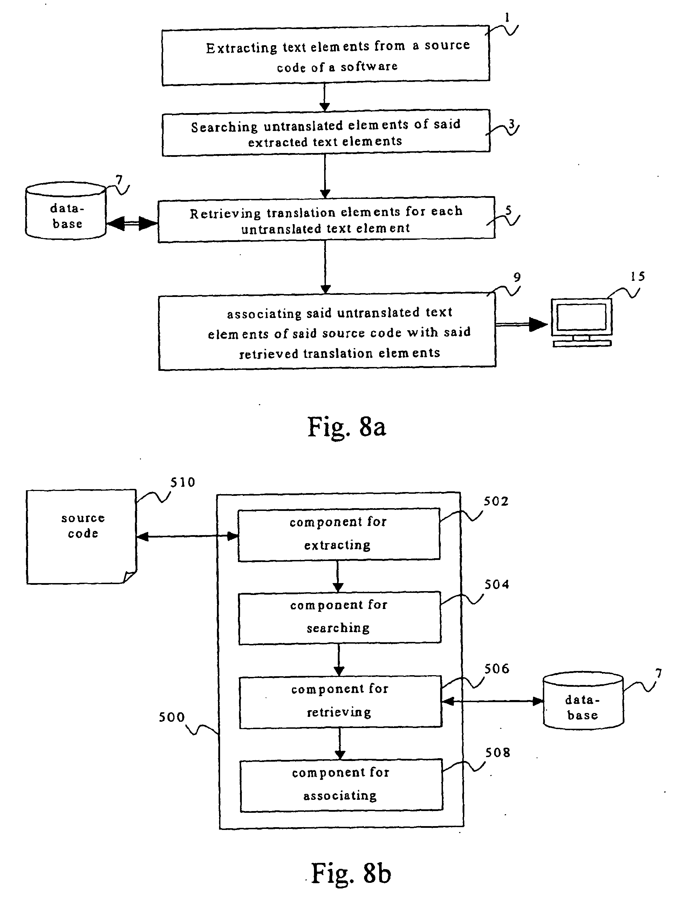

In the following an embodiment will be described with respect to Fig. 8a.

Fig. 8a shows a flowchart according to one embodiment. There are shown the operations of a method for localizing software by changing, adapting or translating the language in a source code of said software, e.g. by translation, wherein the method comprises:

- extracting text elements from said source code of said software, in operation 1;
- searching untranslated elements of said extracted text elements, in operation 3;
- retrieving translation elements for each untranslated text element, in operation 5;
- associating said untranslated elements of the source code with said retrieved translation elements, in operation 9;

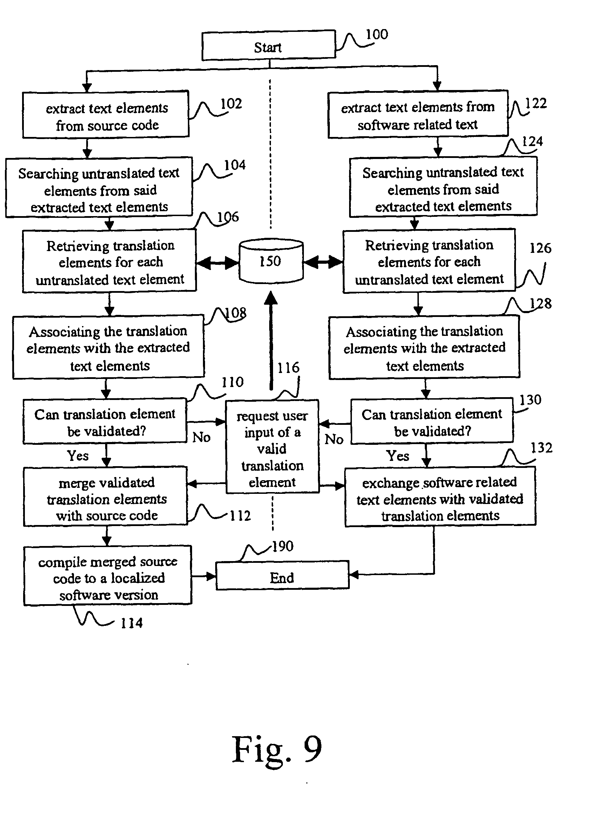

In this basic method, the translation elements can be retrieved from a database 7. The associated untranslated elements and the translation elements can then be transferred to a user interface to be displayed on a screen 15. This basic method for translating texts can be extended to the method described in Fig. 9.

Fig. 8b shows a block diagram illustrating an embodiment of an apparatus for localizing software by changing, adapting or translating the language in a source code of software, e.g. by translation.

The apparatus 500 comprises a component for extracting 502 text elements from a source code 510 of the software. The component for extracting 502 may be constituted by a data processing device or a program section executed at a processing device Moreover, the component for extraction 502 may be realized by a code section containing instructions for extracting. The text elements may be extracted from the source code of the software according to the operation 1 shown in Fig. 8a.

Further, the apparatus 500 comprises a component for searching 504 untranslated elements of the extracted text elements. The component for searching 504 may be constituted by a data processing device or a program section executed at a processing device. Moreover, the component for searching 504 may realized by a code section containing instructions for extracting. The untranslated elements of the extracted text elements may be searched according to operation 3 shown in Fig. 8a.

Further, the apparatus 500 comprises a component for retrieving 506 translation elements for each untranslated text element. The component for retrieving 506 may be constituted by a data processing device or a program section executed at a processing device. Moreover, the component for retrieving 506 may realized by a code section containing instructions for extracting. The translation elements can be retrieved from a database 7. The translation elements may be retrieved for each untranslated text element according to operation 5 shown in Fig. 8a.

Further, the apparatus 500 comprises a component for associating 508 the untranslated elements of the source code with the retrieved translation elements. The component for associating 508 may be constituted by a data processing device or a program section executed at a processing device. Moreover, the component for associating 508 may be realized by a code section containing instructions for extracting. Untranslated elements of the source code may be associated with the retrieved translation elements according to operation 9 shown in Fig. 8a.

Fig. 9 depicts a flowchart of a software localization and related text translation method according to an embodiment. In the figure the method is divided by a dotted line separating a branch 102 to 114 describing the localization of the software from a branch 122 to 132 describing the translation of software related texts. The method depicted in Fig. 9 starts with a start element 100. The start element provides the presence of a software source code and or a software related text. As described in Fig. 8a, both branches start with an extraction operation 102, 122 to extract text elements from the source code and/or from software related text. In a next operation said extracted text elements are searched for untranslated text elements in the operations 104, 124. In the next operations 106, 126 translation elements are retrieved for each untranslated text element from a database 150. Both branches, can access the same database 150 to retrieve the translation elements. Accessing the same database comprises the advantage that both translations are based on the same set of keyword translations. It can therefore be prevented that the manual describing an icon calls it e.g. "Memory" while the same icon in the user interface of the software is called "Storage". So this method for localizing software prevents the occurrence of inconsistencies between e.g. the software and the manuals. The same unambiguous expressions are used for denominating the same notions.

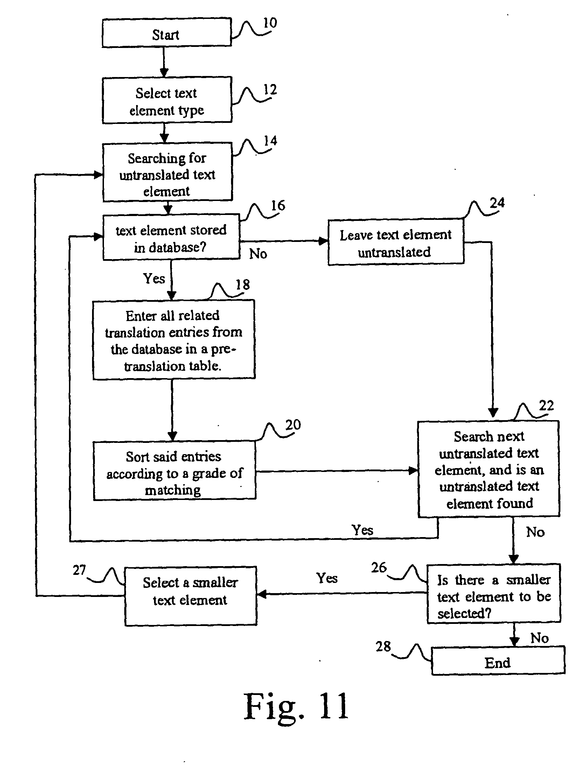

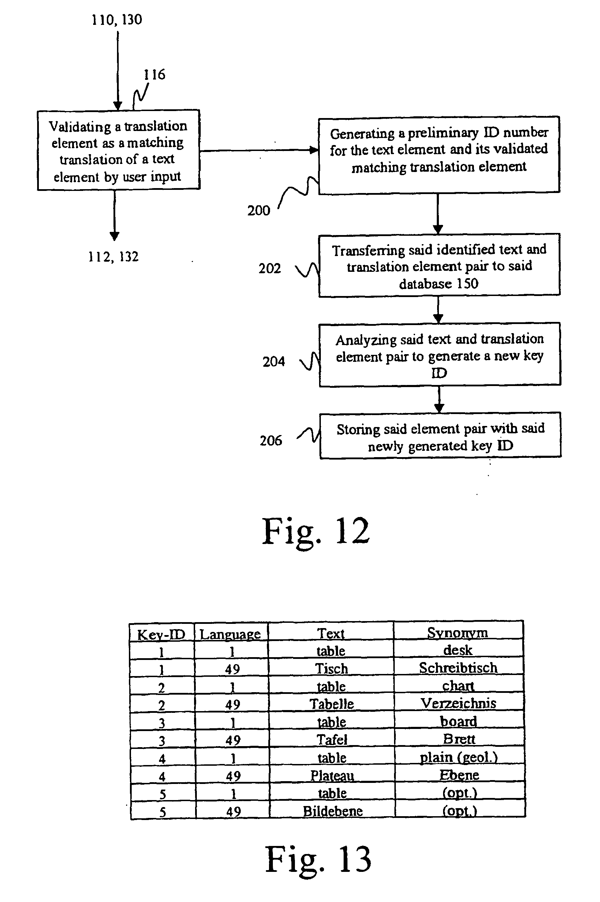

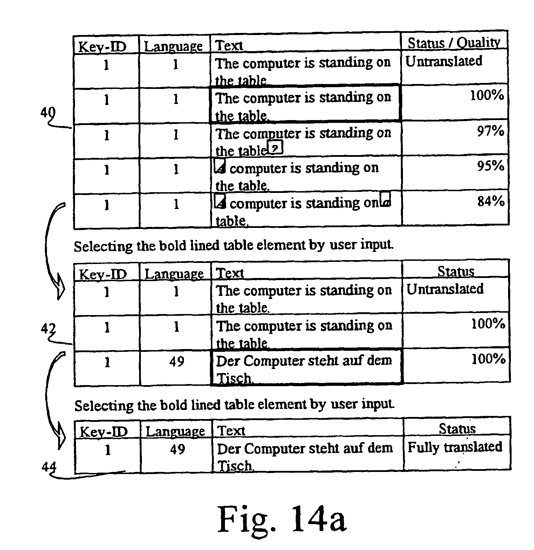

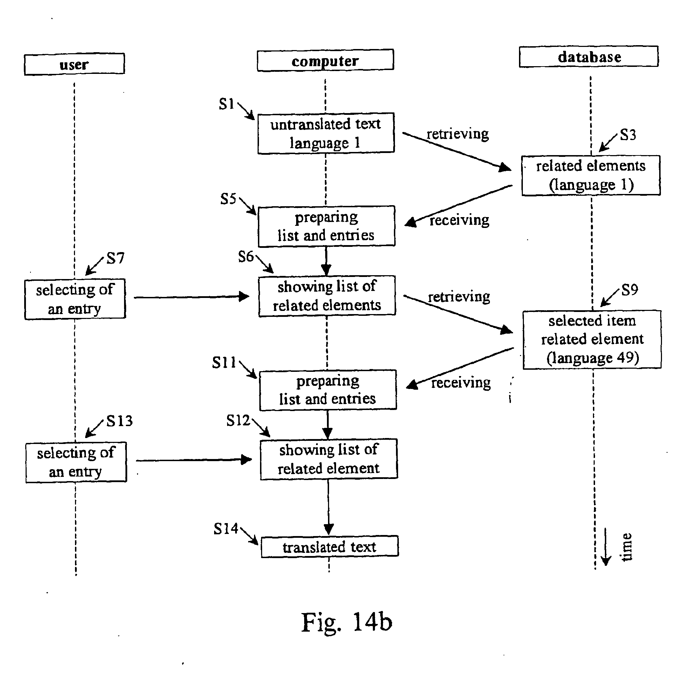

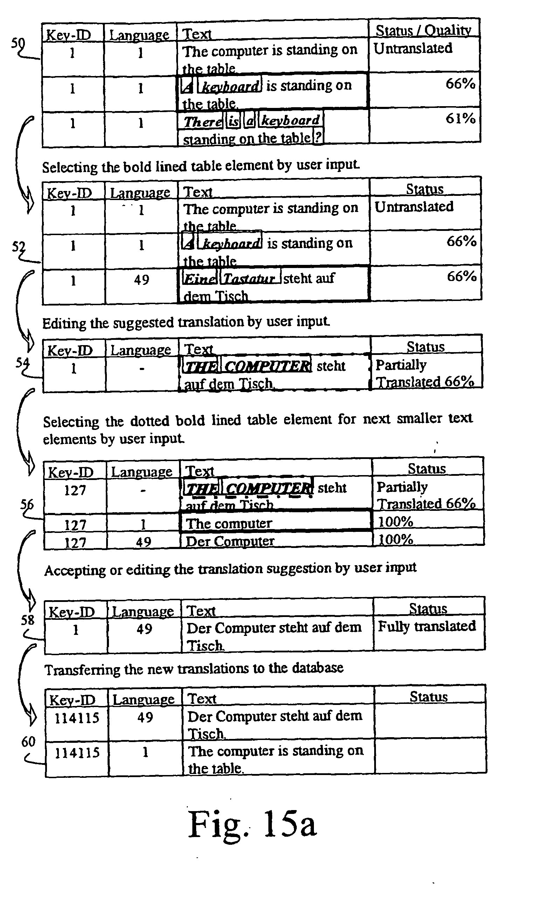

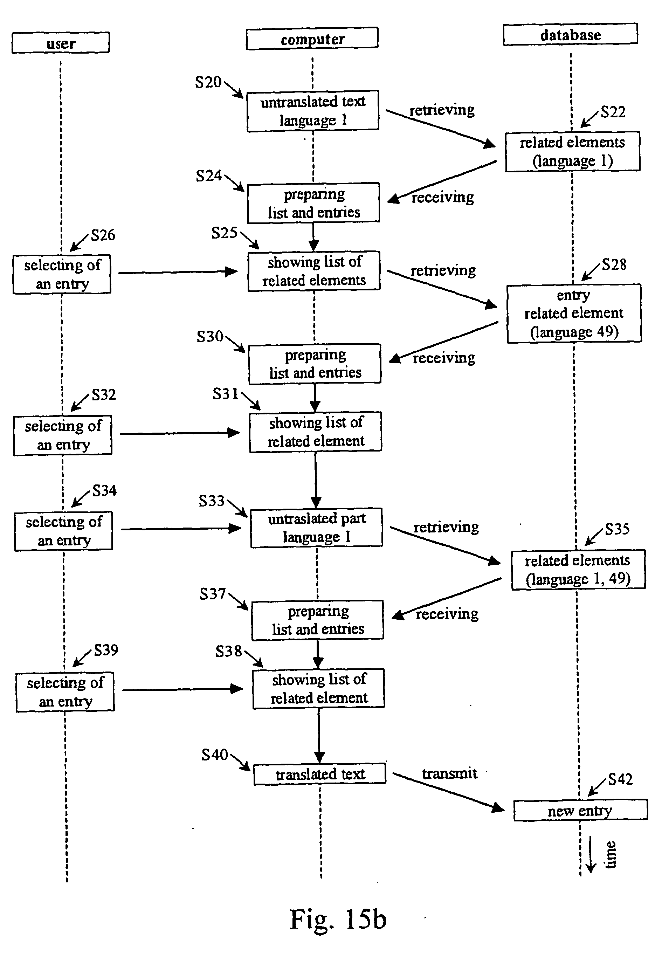

The operations 108, 128 describe the association of the text elements and the translation elements. As described in the following, this may include the use of pre-translation tables as depicted in the figures 14a, 14b, 15a and 15b. It is to be noted that the software source code translation and the software related text translation may be executed with the same or with different translation tables. The operations 110, 130 describe a validation of translation elements. The validation may be executed automatically (or manually by user input). If none of the proposed translation elements can be validated, the method requests a user input of a valid translation element, in operation 116. With the user input of a valid translation, the method can access a new pair of translation elements, that may be utilized in the translation of the other branch. This updating (depicted as the arrow between operation 116 and the database 150) results in a growing database 150, with an increasing number of entries and an increasing precision of the translation proposals. One possible updating procedure is depicted in Fig. 12. It should further be noted that the method of both of the branches may be executed in an interleaving fashion, as above described e.g. in the description of Fig. 11.

It should further be noted that the temporal distribution of the execution of the operations is not important. Therefore, the flowchart may be executed by first localizing the software, and then translating the software related texts, wherein the translation of the texts is determined by the translations previously used for the localization. The flowchart may also be executed by first translating the software related texts, and then localizing the software, wherein the localization of the software is determined by the translation previously used for translating the software related texts. The flowchart may also be executed by simultaneously translating the software related texts and localizing the software, wherein the first validation of a translation element determines the following translations. This embodiment enables two teams to work simultaneously on localizing a software and its manuals, economizing the operations of determining a translation catalogue of key words.

If all translation elements are valid, these are merged (in the first branch) with the source code of the software in operation 112, and the source code of the software is compiled (or assembled) to a localized software version in operation 114. If all translation elements are valid in the second branch they are exchanged with the related text elements of the software related text in operation 132. Then the localization of the software is terminated in operation 190.

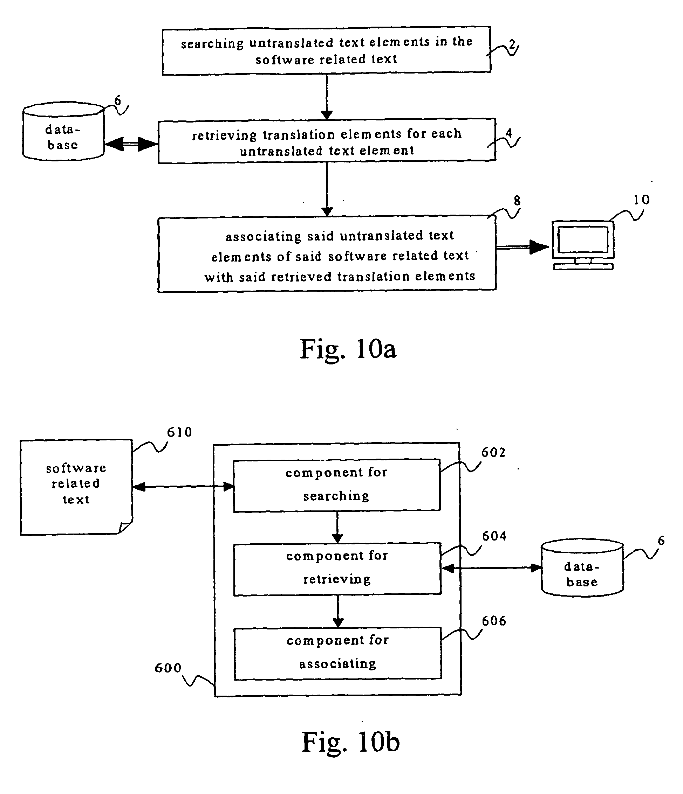

Fig. 10a shows a flowchart according to one embodiment. There are shown the operations of a method for translating elements of a source language text, wherein the method comprises

- searching untranslated elements of the source language text in operation 2,
- retrieving translation elements for each untranslated text element in operation 4,
- associating said searched untranslated elements of the source language with said retrieved translation elements in operation 8.

In this basic method, the translation elements can be retrieved from a storage unit 6. The associated untranslated elements and the translation elements can then be transferred to a user interface to be displayed on a screen 10. This basic method for translating texts can be extended to the method described in Fig. 11. To extend this method to a software localizing method, the storage unit 6 may have been previously fed with different keyword translations from a software localization, and can be used to translate e.g. manuals and the like.

Fig. 10b shows a block diagram illustrating an embodiment of an apparatus for translating elements of a source language text.

Further, the apparatus 600 comprises a component for searching 602 untranslated elements of the software related text 610. The component for searching 602 may be constituted by a data processing device or a program section executed at a processing device. Moreover, the component for searching 602 may realized by a code section containing instructions for extracting. Untranslated elements of the source language text may be searched according to operation 2 shown in Fig. 10a.

Further, the apparatus 600 comprises a component for retrieving 604 translation elements for each untranslated text element. The component for retrieving 604 may be constituted by a data processing device or a program section executed at a processing device. Moreover, the component for retrieving 604 may realized by a code section containing instructions for extracting. Translation elements for each untranslated text element may be retrieved from a database 6 according to operation 4 shown in Fig. 10a.

Further, the apparatus 600 comprises a component for associating 606 the untranslated elements of the source code with the retrieved translation elements. The component for associating 606 may be constituted by a data processing device or a program section executed at a processing device. Moreover, the component for associating 606 may be realized by a code section containing instructions for extracting. The searched untranslated elements of the source language may be associated with the retrieved translation elements according to operation 8 shown in Fig. 10a.

Fig. 11 is a flowchart according to another embodiment. The start box 10 of the flowchart presumes the presence of a source language text, a database with stored source language text elements and related translated target text elements, and that the source and the target language are already entered. At a operation 12 the system program or a user selects the type of text element which the present source language text has to be split into. The text element can be any language or text unit, like text sections, sentences, words and the like. After the splitting of the source text into text elements, the text elements are entered in fields of a translation table (see Fig. 13). Then an untranslated source text element is searched in operation 14, followed by checking the database for a matching source text elements in operation 16. If such a matching text element can't be found, the text element stays untranslated and a respective field in the pretranslation table stays empty or was marked with an "untranslatable " mark in operation 24, and the system searches for the next untranslated source text element in operation 22.

If a matching text element can be found in the database, the system copies the related translation to a pre-translation field in the translation table in operation 18. The text elements stored in the database can be exact matches or fuzzy matches. An exact match means that the source text element and the database text element are identical. A fuzzy match means that the source text element and the database text element only differ in one or a few words or punctuation marks. Fuzzy matches can be marked with an index indicating the fuzziness of the match, i.e. the quality of the match. In both cases the related translations where copied to a pre translation table. In the case of fuzzy matches or in the case of more than one exact match, the pretranslation table entries may be sorted e.g. for their matching quality, to prevent that a user wastes time searching for the best match. More than one translation of a single entry can be possible as translations of single words can be equivocal, and so the translation of whole sentences are equivocal, too. In the next operation 22, the method searches for the next untranslated source text element. If a next text element can be found, the method returns to operation 16, to loop operations 16 to 22, until a next text element can not be found.

If the system cannot find a next source text element, the method requests if the actual text element is the smallest text element available in operation 26. If the actual text element is not the smallest available, the method selects a smaller text element in operation 27 and the method returns to operation 14, to loop operations 16 to 24, until no next smaller text element could be found. If no smaller text element can be found the translation is terminated in operation 28.

Fig. 12 depicts a flowchart of a dictionary database updating method according to another embodiment. The flowchart represents an detailed execution example of the arrow between the element 116 and the database 150 in Fig. 9. As this figure is related to Fig. 9, the element 116 is depicted as used in Fig. 9. In Fig. 9 the element is located between the operations 110, 130 and the operations 112, 132. These connections are indicated with the two arrows and the respective reference numerals. The validating operation 116 leads to a new validated pair of a text element and a respective translation element. To increase the translation database 150, the two elements are provided with a preliminary key identification number (key ID), in operation 200. The pair of elements is transferred to said database 150 in operation 202. The database analyzes both elements to generate a new key ID, in operation 204. Finally, the text element and the translation element are stored, in operation 206. With a new entry stored in database 150, the translation database is growing and enables the database to increase the grade of matching of retrieved translation elements.

It should be noted that the preliminary key ID may be cancelled or economized, if the database itself can generate a key ID. It should further be noted, that the operations of updating the database may only comprise the updating of, e.g. statistical information. The database may only be informed about the number indicating how often a known translation element has been used to translate a certain text element. The statistical information may increase the efficiency to provide e.g. a translation program with an improved standard database.

Fig. 13 depicts a section of a translation table for the use in the above mentioned embodiment for a translation method. The first tree columns of the depicted translation table represent the minimum required information for a translation table. The depicted table contains four columns: In the first column the table contains a key identification (ID), to identify the entry in the translation table. The key ID can be a single key, or a main ID with attached sub-IDs. The second column contains language IDs. The language IDs has information about the used language, and can be represented e.g. as in the present table by the characterizing numbers of the telephone area code. The language ID can be a single key, or a main ID with attached sub-IDs, indicating, e.g. dialects. The third column of the table contains text elements (words) in the different languages. One problem with translations is that synonyms lead to equivocal translations. To simplify the work of the user the table may contain a fourth column, providing additional information about how to use the present word. The fourth column can contain e.g. synonyms or background information of the table entry in the third column.

It may be noted that the different keyword may comprise different columns with different ID numbers (not shown). Different columns can e.g. contain the sorting index in the language of the word, for sorting the text element entries according to different sorting rules, like alphabetic, number of characters, grammar information and the like. To simplify this, additional columns can contain information related e.g. to the actual software number, to enable the users of the system to distinguish if a translation is validated for the present software localization or has been validated for another software localization. The table may further comprise different columns to relate the present entry to different other languages, so that only one table with n-1 additional columns is needed for each language, to provide translations between all n languages. Instead of $n \cdot (n\text{-}1)$ tables to connect each language with every other, another possible table structure with single tables for each language and a central (e.g. n-dimensional) relation matrix (or tensor) would enable the method to use transitive translations. So if a text element never has been translated from a first language to a third language, the system may detect that the text element has been already validated in a translation to a second language, and has been validated in a translation from said second language to said third language, the system may be able to derive a translation proposal via said second language. The described embodiments may also utilize a object oriented database structure for the dictionary database.

It should further be noted that the translation table can further comprise information about the origin of the text or the translation, if the software localization system supports translation specific keyword databases.

Fig. 14a depicts three user interaction interfaces ("screenshots") according to another embodiment . Fig. 14a shows an example of how the described embodiments may be embodied on a computer device. The first screenshot 40 shows a computer program or device depicting all found matches down to a matching of 84%. The screenshot 40 comprises four columns. The first column represents a key ID of the text element (sentence) in the text. The second column represents the language ID of the text element entry. The third column represents the database text elements entries. To simplify the decision which of the pretranslation table entries matching the source text element most, are shown in the source language, and therefore all entries in the language column are all "1". The fourth column can represent two kinds of information. In the case of a source text element the fourth column represents a status. The status of the source text element in the first line and third column of screenshot 40 is "untranslated". In the case of pretranslation entries (line 2 to 5) the fourth column represents a "Quality" value, indicating how exact the source language entry (line 2 to 5) in the pretranslation table matches the source text element (in line 1). The depicted percentage values may be determined e.g. according to the formula: $x = \dfrac{b_{common}}{a_{ste}} \cdot 100$, wherein $a_{ste}$ represents the number of characters of the source text element and $b_{common}$ represents the number characters common and common in sequence to the source text element and the source language database entry.

To simplify the use of the method the differing characters are depicted bold, italic and are surrounded with a box. Other markings of the differences can be applied equally. In screenshot 40 the field in the third column, second line is surrounded by a bold line to indicate that this translation suggestion is marked. With a user input the user may select the surrounded translation suggestion, e.g. by a "mouseclick" an "enter" or a contact with a touch screen.

With the selection the displayed table changes to screenshot 42: all unselected translations suggestions are deleted from the screen, and the third line of the table contains the translation of the database entry. Therefore, line 3 column 1 contain the same key ID as the other two lines, and line 3 column 2 contain the language ID of the target language. Line 3 column 3 contain the translation of the source language database entry, and the column 4 indicate an exact match of the source text element and the source language database entry. The translation suggestion is marked with a bold frame to indicate that the translation suggestion is selected.

With a second user input the depicted table changes to table 44. Only containing one line: In the first field, the key ID of the source text element, in the second field the language ID, in the third field the translated text element, and finally in the fourth field the status indicating "fully translated".

This is only given by way of a non limiting example. So the first two columns of the tables 40, 42, 44 may be economized. The makings may be different. The above described method may even skip the screenshot 42, if the quality of the selected suggestion is 100%.

Fig. 14b illustrates schematically a flow diagram according to the user interaction shown in Fig. 14a. The untranslated text may be the same as shown in Fig. 14a and references to Fig. 14a will be made in order to complete the flow diagram of Fig. 14b. Fig. 14b illustrates the operations of the user iterative interface with respect to the example presented in Fig. 14a.

In an operation S1, an untranslated text may be processed. The text may be "The computer is standing on the table". The untranslated text may be further a text according to language "1".

In an operation S3, the database may be accessed for retrieving translation elements for the untranslated text of the same language, herein all related translation element of the language "1". The retrieving may involve a matching operating wherein the matching operation may result in exact matches or in fuzzy matches.

In an operation S5, the retrieved related elements may be received by the computer executing the user interaction interface. The matching quality value according to the formula $x = \dfrac{b_{common}}{a_{ste}} \cdot 100$ is determined of the received related translation elements.

In an operation S6, the untranslated text, the translation related elements is sequenced in a list by the user interaction interface according to the list 40 depicted in Fig. 14a. All retrieved entries are listed according to their matching quality.

In an operation S7, the user may select an entry of the presented list 40 shown in Fig. 14a. Since the second list entry may have assigned a quality of 100%, the untranslated text and the translating related element match exactly. Due to the matching quality the user may select the second entry of the list, indicated by the bold surrounding lines according to the depicted list 40 in Fig. 14a.

In an operation S9, the translation of the translation related element selected in operation S7 may be retrieved from the database. For retrieving the respective key-ID of the selected translation related element may be used. The retrieved translation may be a translation of the selected translation related element into the language "49".

In an operation S11, The translation of language "49" of the selected translation related element may be received by the user interactive interface from the database. A list may be prepared presenting the untranslated text, the selected translation related element and the translation to the user desired language, herein a translation from the language "1" which is the language of the untranslated text to the language "49". The matching quality have been determined in operation S5 so that a new determination may be skipped. The matching quality value of the translation related element may be assigned to the corresponding retrieved translation since the determination of the above defined matching quality may be determined only in combination with text of the same language.

In an operation S12, the respective list comprising the key-ID, the language code, the corresponding element and the status or quality, respectively, may be presented in a list illustrated as list 42 in Fig. 14a.

In an operation S13, the user confirms the translation of the untranslated text by selecting the translation. The selection may be indicated by bold surrounding lines which is shown in list 42 in Fig. 14a.

Due to the fact that the matching quality of the untranslated text and the translation related element retrieved from the database shows a value of 100% the translation is an exact translation. The respective entry is available in the database such that no additional entry may have to be added to the translation database.

In an operation S14, the translation of the untranslated text has been done successfully and is finished. The user interactive interface may present the next untranslated text for translating the user and may start again with operation S1.

The shown example is related to a 100% matching translation. That means, that the exact translation of the untranslated text was found in the database. Therefore, no further database entries may have to be included in the database. The following Fig. 15a and Fig. 15b present an example of a non-exactly matching untranslated text involving the generation of a new database entry.

Fig. 15a depicts another set of user interaction interfaces ("screenshots") according to another embodiment. Fig. 15a shows an example of how the described embodiments may be embodied on a computer device. The first screenshot 50 shows a screenshot of a computer program or device depicting all found matches in a matching range of 66% down to 61%. The screenshot 50 comprises four columns. As in Fig. 14a, the first column represents a key ID of the text element (sentence) in the text. The second column represents the language of the text element entry. The third column represents the source text element and database text elements entries. To simplify the decision which of the pretranslation table entries are matching the source text element most, the pre-translation entries are shown in the source language, and therefore all entries in the language column are "1". Similar to Fig. 14a, the fourth column can represent two kinds of information. In the case of a source text element the fourth column represents a status. The status of the source text element in the screenshot 50 is "untranslated". In the case of pretranslation entries (line 2 to 3) the fourth column represents a "Quality" value, indicating how exact the source language entry in the pretranslation table matches the source text element.

The depicted percentage values are determined according to the same formula as in Fig. 14a. The formula used in Fig. 14a may be modified by replacing $a_{ste}$ by $a_{dte}$ representing the number of characters of the database text element. It should be noted that the formula is not limited to the use of characters, but can be applied e.g. to words, sentences and the like too. The formula may also comprise other terms using grammar structure related values to characterize the matching. In difference to Fig. 14a the retrieved translation suggestions reaches a maximum match of only 66%. The closest source text entry in the table is marked with a bold frame.

With a selection of the bold frame by user input, the system depicts the screenshot 52. The screenshot 52 depicts in the first line the source text element, in the second line the retrieved database text entry and in the third line the translation of the database entry. As the system can detect the and mark the differences between the source text element and the database entry, the system can be able to mark the differences in the translation of the database entry. All marked elements are depicted bold, italic, and with a small frame in the figure.

Next the user may edit the translation entry pretranslation table in an additional operation, e.g. by keyboard input or the like. Advanced systems may even utilize voice recognition algorithms. In the present pretranslation table the user accepted the proposed translation by a user input.

By accepting the proposed translation matching only 66% with the source text element, the system only translates the matching part of the source text element. The screenshot 54 represents a partially translated element in the pretranslation table. The table 54 may further depict the source text element and the retrieved database entry translation. In the first column the table depicts the key ID "1" of the source text element. In the second column the table depicts no entry, as a partially translated sentence can hardly be related to a single language. The entry in the second column can be "1", or "1-49" as part of the text element still is untranslated. In the third column the partially translated text is depicted, with a bold, italic underlined untranslated part depicted in capitals. The untranslated sentence is surrounded by a dotted bold frame to indicate that the present state of the sentence requires additional processing.

To reach the next operation, the user may select another text element size to post-process the entry in the preprocessing table, or the user may first translate all other text elements and proceed then with a smaller text element.

The next screenshot 56 depicts a second translation stage with smaller text elements. In this stage the text elements are words and/or word/article combinations. The present table depicts in the first column a newly generated key ID 127, to distinguish the different stages of the translation algorithm. In the second column first line, the language ID has not be changed, as the sentence is still only partially translated, while in the second line the retrieved database entry is marked with a "1" and in the third line the translation suggestion is marked as the target language with a "49". In the third column the untranslated part is of the sentence is marked as in table 54, its related database entry and its translation suggestion retrieved from a translation database.

With a user input accepting the proposed translation, the depicted table changes to table 58, containing only one line: In the first field, the key ID of the source text element (in this case the sentence), in the second field the language ID "49", in the third field the translated text element, and finally in the fourth field the status indicating "fully translated".

With the operation of accepting the suggested translation proposal, the system generates a new database entry 60 containing the source text element and the accepted translation. To retrieve the pair simple and fast, the entries comprise key IDs, language IDs. The new database entry is not necessarily depicted, as the storage operation can be executed automatically.

It should be noted that the translation database may comprise different 100% matching database entries, due to different equivocal translations.

Fig. 15b illustrates schematically a flow diagram according to the user interaction shown in Fig. 15a. The untranslated text may be the same as shown in Fig. 15a and references to Fig. 15a will be made in order to complete the flow diagram of Fig. 15b. Fig. 15b illustrates the operations of the user iterative interface with respect to the example presented in Fig. 15a.

In an operation S20, an untranslated text may be processed. The text may be "The computer is standing on the table". The untranslated text may be further a text according to language "1".

In an operation S22, the database may be accessed for retrieving translation elements for the untranslated text of the same language, herein all related translation element of the language "1". The retrieving may involve a matching operating wherein the matching operation may result in exact matches or in fuzzy matches.

In an operation S24, the retrieved related elements may be received by the computer executing the user interaction interface. The matching quality value according to the formula $x = \dfrac{b_{common}}{a_{die}} \cdot 100$ is determined of the received related translation elements.

In an operation S25, the untranslated text, the translation related elements is sequenced in a list by the user interaction interface according to the list 50 depicted in Fig. 15a. All retrieved entries are listed according to their matching quality. The list may present the key-ID, the language the untranslated text or the translation related elements, respectively, and the matching quality. The non-fitting text parts of the translation related elements in relation to the untranslated text may be indicated by italic characters.

In an operation S26, the user may select an entry of the presented list 50 shown in Fig. 15a. In this example no entry of the list shows a matching quality of 100% indicating that no exact match was retrieved from the database. The second entry of list 50 shown in Fig. 15a may have a matching quality value of 66%. The user may select the best matching entry, herein the second list entry which may be indicated by bold surrounding lines.

In an operation S28, the translation of the translation related element selected in operation S26 may be retrieved from the database. For retrieving the respective key-ID of the selected translation related element may be use. The retrieved translation may be a translation of the selected translation related element to the language "49".

In an operation S30, the translation of language "49" of the selected translation related element may be received by the user interactive interface from the database. A list may be prepared presenting the untranslated text, the selected translation related element and the translation to the user desired language, herein a translation from the language "1" which is the language of the untranslated text to the language "49". The matching quality have been determined in operation S24 so that a new determination may be skipped. The matching quality value of the translation related element may be assigned to the corresponding retrieved translation since the determination of the above defined matching quality may be determined only in combination with text of the same language.

In an operation S31, the respective list comprising the key-ID, the language code, the corresponding element and the status or quality, respectively, may be presented in a list illustrated as list 52 in Fig. 15a. The non-fitting text parts of the translation related elements in relation to the untranslated text may be indicated by italic characters.

In an operation S32, the user confirms the translation of the untranslated text by selecting the translation. The selection may be indicated by bold surrounding lines which is shown in list 52 in Fig. 15a.

In an operation S33, due to the fact that no exact matching translation related element was found in the database a mixed language translation result may be presented to the user by the user interactive interface. This can be seen in list 54 shown in Fig. 15b. The text "The computer" may have not been translated. But the remaining part of the sentence may have been translated by the above performed operations.

In an operation S34, the user may select the untranslated text part for further translation. This can be seen in list 54 shown in Fig. 15a.

The translation may be further continued by trying to translate a not translated text part, defining this part as a untranslated text and performing translation operations according to the operation described above. The untranslated text "The computer" of the language "1" may be operated in the following steps.

In an operation S35, a translation related element according to the untranslated text part may be retrieved from the database. The retrieving may involve a matching operating wherein the matching operation may result in exact matches or in fuzzy matches. The translation related elements of the language "1" according to the untranslated text part are searched.

The retrieving of translation related elements with respect to the untranslated text part may only return a single matching translation related element. In this case, the respective translation (language "49") may be also automatically retrieved from the database since no further translation related elements may be presented to the user for selecting.

In an operation S37, due to the retrieving of the translation related element and the translation into the language "49" thereof a list of the partially translated text, the translation related element according to the untranslated text part and the translation may be prepared. The matching quality value may be determined. The determining of the quality may be derived in respect to the untranslated text part and the retrieved translation related element. The translation may have assigned the same matching quality value.

To indicate the new translation operation with respect to the untranslated text part, a new key-ID may be assigned to the list entries. According to list 56 shown in Fig. 15b, the key-ID may be "127".

In an operation S38, the list of the partially untranslated text, the retrieved translation related element and the translation (language "49") may be shown to the user. The respective list can be seen in list 56 shown in Fig. 15a. The partially translated text may have assigned no language ID. A status information of the partially translated text may indicate a percentage value according to the translated text part.

In an operation S39, the user may select the second list entry of the list 56 shown in Fig. 15b. The selection may be indicated by bold surrounding lines.

In an operation S40, the combination of the two independent translation operations of the untranslated text of operation S20 may lead to the complete translation thereof. The complete translation may be presented by the user interactive interface to the user. The key-ID of the translation may show the former key-ID value of operation S31. The status information indicates the successful translation. The respective list 58 is shown in Fig. 15a.

In an operation S42, since the untranslated text was not found in the database a new database entry may be generated. The contents of the new database entry is shown in list 60 of Fig. 15b. The key-ID may be given by an available key-ID of the database and may be generated automatically as a result of the generation of the database entry. The user interactive interface may present the next untranslated text for translating the user and may start again with operation S20.

A new entry may have been generated for the untranslated text presented in operation S20. Further occurrence of this untranslated text may lead to the retrieving of a translation related element of a matching quality value of 100%. The operations of the user interactive interface in case of exact matches are above described in detail in Fig. 14a and Fig. 14b.

The continuos adding of new database entries according to the presented embodiment may ensure that untranslated text is translated in the same manner to the respective translation language preventing the usage of synonyms or synonym text constructions which may irritate and confuse a reader of the translated text.

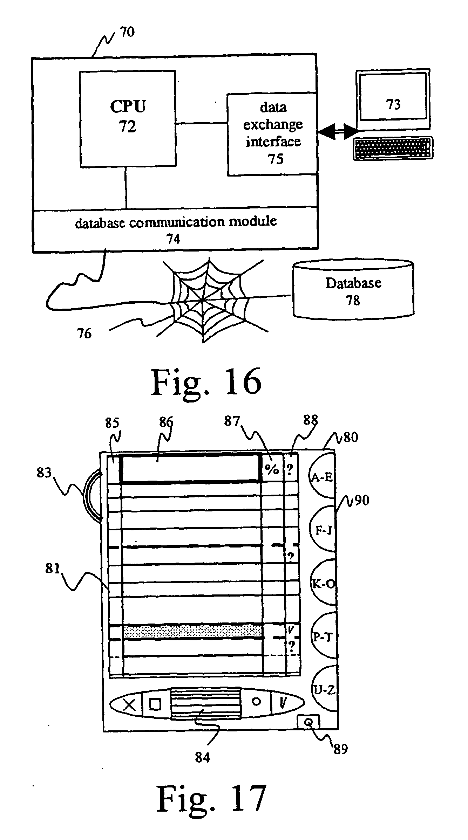

Fig. 16 depicts an apparatus for translating texts according to another embodiment by means of a database and a database management system, comprising

- a module 74 to communicate with a database 78,
- a module 75 for exchanging data,
- processing device 72 for retrieving elements from a database.

There is also depicted a realization of the apparatus 70 according to one embodiment. The apparatus 70 is connected via a communication module 74 to a network 76. Via the network 76 the apparatus 70 can communicate with other devices (not shown) e.g. to exchange data. The network 76 can be the internet, or any other wide area, or local area network. The communication module 74 is connected to a Central Processing Unit (CPU) 72, to execute the exchange and filtering of data. The CPU 72 is connected to a data exchange interface 75, e.g. a user interaction interface. The data exchange interface 75 can be connected to a keyboard and a display, or via a network to a terminal device to interact with a user. The database 78 contains the translation data to be accessed, via said communication module 74 and said network 76. To be able to translate texts in a correct way, the CPU 72 must be able to receive the source texts and to relate said source texts with the data stored in the database 78. The source texts may be received via the data exchange interface 75, or via the communication module 74 from the network 76. To simplify the reception of the source texts, the user interaction device 73, the database 78 may be incorporated in a single and maybe portable device (see Fig. 17).

Fig. 17 depicts a sentence based electronic translation apparatus according to another embodiment. The translation apparatus is embodied as an interactive electronic dictionary 80. The electronic dictionary can be an electronic book comprising a display 81 for depicting a pretranslation table containing, a source text, translation proposals, a translated text and translation related information. In the translation table the first column 85 represents a key ID, to identify every text element in the source text. The second column 86 contains source text elements and translation proposals. Third column 87 contains matching indices to indicate how similar the source text entry is to the source text element. The fourth column 88 contains status symbols to indicate if the source text element requires further processing or translating. The user can interact with the dictionary by a scroll wheel 83, keys, a scroll roll 84 and thumb index menu keys 90. A user can e.g. pre-select a character or source text element with the thumb index 90, scroll the alphabet or the source text elements with the scroll wheel 83, and select translation proposals with the keys and the scroll roll 84. The electronic dictionary can further contain an interface 89 to communicate with e.g. a network to update its database or exchange data with another database. The dictionary may further upload new source texts via the interface 89, or print translated texts on a printer connected to the interface. The electronic dictionary (ED) may further comprise a built in scanner to recognize source texts autonomously. The dictionary may further comprise an extension slot, to connect the ED with handheld scanners, mobile communication devices, wireless networks and the like. So the ED may be used as a translation device for custom officers, to translate foreign bills of loading. The ED 80 may also be used as a conventional electronic book. An electronic book application has the advantage that users may read a book in its original language, with the option to translate single sentences.

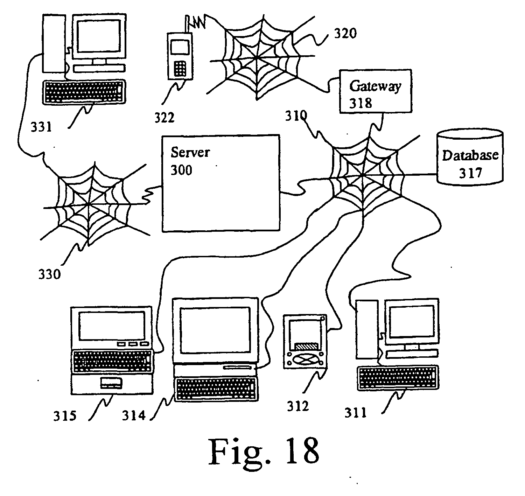

Fig. 18 depicts a network system with an apparatus as described in Fig. 16 or 17 and at least one database 317. The apparatus can be a server 300 or client devices 311-316, 322, 331. The database can be the database 317, or any other database integrated in one of the client devices 311-316, 322, 331 or the server 300. The client devices are connected via networks 310, 330, 320 to the server 300. It is assumed that the server 300 contains an internal database (not shown) or can at least access an external database 317 or a database in one of the client devices 311-317, 322, 331. In the figure the server is directly connected to two networks, a local area network (LAN) 330 and a wide area network (WAN) 310. In the LAN 330 only one client is depicted, the personal computer 331. The WAN 310 is connected to a personal computer 311, a personal digital assistant (PDA) 312, a browser 314, laptop 315, a database 317 and a gateway 318 to a communication network 320. The gateway 318 indirectly connects a communication device 322, e.g. a mobile telephone with computation abilities with the server 300. So all the client devices 311-317, 322, 331 are connected to the server 300.

All client devices may comprise user interfaces, CPUs and memories or even databases. To execute the method according to the described embodiments the client devices 311-317, 322, 331 and/or the sever 300 are enabled to access a translation database. Thereby, the exact location of the translation database is not important. So the database 317 may comprise the translation database and offer the client devices 311-317, 322, 331 to access the stored translation elements. Or each client device 311-317, 322, 331 comprises its own translation database enabling them to translate text elements received from an internal or remote device. The method according to the described embodiments is executable as long as a translation database is accessible, e.g. via the networks 310, 320, 330. In the simplest case the client devices 311-317, 322, 331 themselves contain a translation database. In the simplest case the client devices are autonomous software localizing devices being connected to the network only to access new software to be localized. A very complex case would be to access a database 317 via a server 300 which is accessing distinct databases to retrieve text elements to be translated.

As the data of the database are usually retrieved by a database management system (DBMS) the data source may be able to use relational algorithms between tables. The DBMS can store the text elements e.g. in a directory table, and the translation elements in a related user specific translation table. So the data source of the DBMS may utilize relational algebra to interconnect said text elements with said translation elements. The DBMS user interface enables the user to translate text elements by accessing pre-translation tables. The translation elements can be selected and/or validated in each field of the pre-translation table by a user input. The user input can be a keyboard input, a mouse input and the like. In a last operation the validated text elements and validated translation elements are stored in the database, to be automatically retrieved if the user accesses the database with a DBMS to retrieve said text element next time.

According to another embodiment, an apparatus for localizing software by adapting the language of text contained in a source code of said software and an apparatus for localizing software related text by adapting the language of the text has following structural elements:

1) Apparatus for localizing software by adapting the language of text contained in a source code of said software, comprising:

- a code section containing instructions for extracting text elements from said source code,
- a code section containing instructions for searching untranslated elements of said extracted text elements,
- a code section containing instructions for retrieving translation elements for each untranslated test element and
- a code section containing instructions for associating said untranslated elements of said source code with said retrieved translation elements.

2) Apparatus according to 1) further comprising:

- a code section containing instructions for validating said retrieved translation elements and
- a code section containing instructions for merging said source code with said validated translation elements.

3) Apparatus according to 1) or 2), further comprising:

- a code section containing instructions for compiling said merged source code.

4) Apparatus according to any one of 1) to 3), for adapting the language of text related to said software, further comprising:

- a code section containing instructions for searching untranslated elements of said software related text,
- a code section containing instructions for retrieving translation elements for each untranslated text element on the basis of the association of said retrieved source code translation elements and
- a code section containing instructions for associating said untranslated elements of the software related text with said retrieved translation elements.

5) Apparatus for localizing software related text by adapting the language of the text, comprising:

- a code section containing instructions for searching untranslated elements of said software related text,
- a code section containing instructions for retrieving translation elements for each untranslated text element and,
- a code section containing instructions for associating said untranslated elements of said text with said retrieved translation elements.

6) Apparatus according to any one of 1) to 5), wherein said code section containing instructions for associating is executed by a code section containing instructions for entering said retrieved translation elements into a table.

7) Apparatus according to any one of 1) to 6), wherein the code section containing instructions for retrieving translation elements comprises a code section containing instructions for comparing each untranslated text element with entries of a dictionary database.

8) Apparatus according to any one of 1) to 7), wherein said retrieved translation element is entered at the location of said untranslated text element or in proximity of said untranslated text element.

9) Apparatus according to any one of 1) to 8), further comprising:

- a code section containing instructions for displaying matching translation elements to a user and
- a code section containing instructions for accepting a user input indicating a validation of a specific matching translation element.

10) Apparatus according to any one of 1) to 9), further comprising a code section containing instructions for editing said received translation element, by user input, prior to said validation.

11) Apparatus according to any one of 7) to 10), wherein said code section containing instructions for entering operation comprises a code section containing instructions for updating said dictionary database with said validated translation element.

12) Apparatus according to any one of 7) to 11), wherein the code section containing instructions for retrieving comprises:

- a code section containing instructions for searching matching translation elements in said dictionary database and
- a code section containing instructions for generating an index, indicating the percentage of matching.

13) Apparatus according to 12), wherein said table is a pre-translation table and the number of entries in said pre-translation table at the location of an untranslated text element is related to said index which is provided for an untranslated element.

14) Apparatus according to 12) or 13), further comprising:

- accepting said translation element of said text element entry as a valid translation entry automatically, if said index indicates an exact match of said untranslated text element with said text element entry.

15) Apparatus according to any one of 1) to 14), further comprising a code section containing instructions for marking text elements as translated or untranslated or partially translated elements.

16) Apparatus according to any one of 1) to 15), wherein said text elements are words, sentences and/or texts.

17) Apparatus according to any one of 1) to 16), further comprising the a code section containing instructions for processing of text elements and translated text elements stored in said database to extract translation related information.

18) Apparatus according to any one of 1) to 17), further comprising a code section containing instructions for sorting said text elements.

According to another embodiment, a method for localizing software may have the following elements.

19) A method for localizing software by adapting the language of text contained in a source code of said software, comprises the operations of:

- extracting text elements from said source code;
- searching untranslated elements of said extracted text elements;
- retrieving translation elements for each untranslated text element;
- associating said untranslated elements of the source code with said retrieved translation elements;

20) Method according to 19) further comprising the operations of

- validating said retrieved translation elements;
- merging said source code with said validated translation elements.

21) Method according to 19) or 20), further comprising the operation of:

- compiling said merged source code.

22) Method according to any one of 19) to 21), for adapting the language of text related to said software, further comprising the operations of:

- searching untranslated elements of said software related text,
- retrieving translation elements for each untranslated text element on the basis of the association of said retrieved source code translation elements,
- associating said untranslated elements of the software related text with said retrieved translation elements.

According to another embodiment, a method for localizing software may have the following elements.

23) Method for localizing software related text by adapting the language of the text, comprising the operations of:

- searching untranslated elements of said software related text,
- retrieving translation elements for each untranslated text element,
- associating said untranslated elements of said software related text with said retrieved translation elements.

24) Method according to any one of 19) to 23), wherein said associating is executed by entering said retrieved translation elements into a table.
25) Method according to any one of 19) to 24), wherein the operation of retrieving translation elements comprises the operation of comparing each untranslated text element with entries of a dictionary database.
26) Method according to any one of 19) to 25), wherein said retrieved translation element is entered at the location of said untranslated text element or in proximity of said untranslated text element.
27) Method according to any one of 19) to 26), further comprising:

- displaying matching translation elements to a user,
- waiting for user input indicating a validation of a specific matching translation element.

28) Method according to any one of 19) to 27), further comprising an operation of editing said received translation element, by user input, prior to said validation.
29) Method according to any one of 7) to 28), wherein said entering operation comprises updating said dictionary database with said validated translation element.
30) Method according to any one of 7) to 29), wherein said retrieving operation comprises the operation of searching matching translation elements in said dictionary database and further comprises the operation of:

- generating an index, indicating the percentage of matching.

31) Method according to 12), wherein said table is a pre-translation table and the number of entries in said pre-translation table at the location of an untranslated text element is related to said index which is provided for an untranslated element.
32) Method according to 12) or 31), further comprising the operation of:

- accepting said translation element of said text element entry as a valid translation entry automatically, if said index indicates an exact match of said untranslated text element with said text element entry.

33) Method according to any one of 19) to 32) further comprising the operation of marking text elements as translated or untranslated or partially translated elements.
34) Method according to any one of 19) to 33), wherein said text elements are words, sentences and/or texts.
35) Method according to any one of 19) to 34), further comprising the processing of text elements and translated text elements stored in said database to extract translation related information.
36) Method according to any one of 19) to 35), further comprising the operation of sorting said text elements.

According to another embodiment, a software tool for enabling and supporting a user to localize software or software related texts by translating texts by means of a database may be provided, comprising program code portions for carrying out the operations of any one of 19) to 35) when said program is implemented in a computer program.
According to another embodiment, a computer program for enabling and supporting a user to localize software or software related texts by translating texts by means of a database may be provided, comprising program code section for carrying out the operations of any one of 19) to 35) when said program is run on a computer or a network device.
According to another embodiment, a computer program product for enabling and supporting a user to localize software or software related text by translating text elements by means of a database may be provided, wherein said computer program product is comprising program code sections stored on a computer readable medium for carrying out the method of any one of 19) to 35) when said program product is run on a computer or network device.
According to another embodiment, an apparatus for localizing software by adapting the language of text contained in a source code of said software may be provided, comprising:

- a component for extracting text elements from said source code;
- a component for searching untranslated elements of said extracted text elements;

- a component for retrieving translation elements for each untranslated test element;
- a component for associating said untranslated elements of said source code with said retrieved translation elements.

According to another embodiment, an apparatus for localizing software related text by adapting the language of the text may be provided, comprising:

- a component for searching untranslated elements of said software related text ;
- a component for retrieving translation elements for each untranslated text element;
- a component for associating said untranslated elements of said text with said retrieved translation elements.

According to another embodiment, an apparatus for enabling and supporting a user to localize software and/or software related texts by translating text by means of a database may be provided,

37) Apparatus for enabling and supporting a user to localize software and/or software related texts by translating text by means of a database may be provided, comprising

- a module to communicate with a database,
- an interface for exchanging data,
- a processing device for retrieving elements from a database, connected to said communication module and to said data exchange interface.

38) Apparatus according to 37), further comprising

- a dictionary database connected to said communication module.

According to another embodiment, a network system for enabling and/or supporting at least one user to localize software or software related text by translating text by mans of a database may be provided, comprising

- at least one apparatus according to one of 37) and 38);
- at least one translation database for exchanging data with said at least one apparatus.

**Claims**

1. Method for providing image buttons in a plurality of languages, the method utilizing data processing means, including collecting image text elements of a plurality of image buttons in a first language in a text element file; obtaining translated image text elements for the text element file in at least one second language; obtaining image button information from a template; and effecting creation of an image button for at least one of the text elements in the first and second language.

2. Method according to claim 1, wherein effecting creation of an image button includes a graphics application program which is script enabled and wherein effecting creation of an image button includes generating a script to instruct the graphic application program to generate the image button based on given parameters.

3. Method according to claim 2, wherein the given parameters include the template and the image text elements.

4. Method according to at least one of the preceding claims, including generating an input file including at least one image text element.

5. Method according to claim 4, wherein the input file further includes at least one of the group consisting of:

   - a language ID; and
   - a name of an image button file to create.

6. Method according to at least one of the claims 4 and 5, wherein the graphics application program is started with the script on a remote server and is provided with the name of the input file and image button information.

7. Method according to at least one of the preceding claims, wherein the image button information includes information related to at least one element of the group consisting of:

- image button size;
- image button shape;
- colour; and
- position of a text element.

8. Method according to at least one of the preceding claims, including generating an empty image button based on the template and merging the translation text element into the empty image button.

9. Method according to at least one of the preceding claims, wherein the text element file includes information on an output file name of the image button and information on a template required for an image button creation.

10. Method according to at least one of the preceding claims, wherein collecting image text elements includes extracting text elements from at least one image creation file including position information and image text elements of a plurality of image buttons in a first language; and wherein the image text elements in the second language are merged into an image creation file for the second language.

11. Method according to at least one of the preceding claims, wherein obtaining translated image text elements includes extracting relevant information from the text element file and importing the information into a database.

12. Method according to at least one of the preceding claims, wherein obtaining the translated image text elements includes using a web-based tool.

13. Method according to at least one of the preceding claims, wherein the text element file is constituted by a XML file and wherein generating the translated image text elements includes a XML editor.

14. Method according to at least one of the preceding claims, including merging the translated image text elements into the text element file.

15. A program having instructions adapted to cause data processing means to carry out the method of at least one of the claims 1 - 14.

16. A computer readable medium, in which a program is embodied, where the program is to make a computer execute the method of at least one of the claims 1 - 14.

17. A computer program product comprising the computer readable medium according to claim 16.

18. Data processing unit for providing image buttons in a plurality of languages, including
collecting means (101) for collecting image text elements of a plurality of image buttons in a first language in a text element file;
translation means (102) for obtaining translated image text elements for the text element file in at least one second language;
image parameter means (103) for obtaining image button information from a template; and
graphic command means (104) for effecting creation of an image button for at least one of the text elements in the first and second language.

19. Data processing unit according to claim 18, wherein the graphic command means (104) is adapted to generate a script to instruct a graphic application program to generate the image button based on given parameters.

20. Data processing unit according to claim 19, wherein the given parameters include the template and the image text elements.

21. Data processing unit according to at least one of the claims 18 to 20, wherein the graphic command means (104) is adapted to generate an input file including at least one image text element.

22. Data processing unit according to claim 21, wherein the input file further includes at least one of the group consisting of:

- a language ID; and
- a name of an image button file to create.

23. Data processing unit according to at least one of the claims 21 and 22, wherein the graphic command means (104) is adapted to start the graphics application program with the script on a remote server and to provide the graphics application program with the name of the input file and image button information.

24. Data processing unit according to at least one of the claims 18 to 23, wherein the image button information includes information related to at least one element of the group consisting of:

- image button size;
- image button shape;
- colour; and
- position of a text element.

25. Data processing unit according to at least one of the claims 18 to 24, wherein the graphic command means (104) is adapted to effect generation of an empty image button based on the template and merging the translation text element into the empty image button.

26. Data processing unit according to at least one of the claims 18 to 25, wherein the text element file includes information on an output file name of the image button and information on a template required for an image button creation.

27. Data processing unit according to at least one of the claims 18 to 26, wherein the collecting means (101) is adapted to extract text elements from at least one image creation file including position information and image text elements of a plurality of image buttons in a first language, and to merge the image text elements in the second language into an image creation file for the second language.

28. Data processing unit according to at least one of the claims 18 to 27, wherein the translation means (102) is adapted to extract relevant information from the text element file and to import the information into a database.

29. Data processing unit according to at least one of the claims 18 to 28, wherein the translation means (102) is adapted to invoke a web-based translation tool.

30. Data processing unit according to at least one of the claims 18 to 29, wherein the text element file is constituted by a XML file and including a XML editor for generating translated image text elements.

31. Data processing unit according to at least one of the claims 18 to 30, wherein the collecting means (101) is adapted to merge the translated image text elements into the text element file.

**Patentansprüche**

1. Verfahren zum Vorsehen von Bildknöpfen (image buttons) in einer Vielzahl von Sprachen, wobei das Verfahren Datenverarbeitungsmittel nutzt, einschließend
   Sammeln von Bildtextelementen einer Vielzahl von Bildknöpfen in einer ersten Sprachen in einer Textelementdatei;
   Erhalten übersetzter Bildtextelemente für die Textelementdatei in mindestens einer zweiten Sprache;
   Erhalten von Bildknopfinformation von einer Vorlage; und
   Bewirken der Erstellung eines Bildknopfes für mindestens eines der Textelemente in der ersten und zweiten Sprache.

2. Verfahren nach Anspruch 1, wobei das Bewirken der Erstellung eines Bildknopfes ein grafisches Anwendungsprogramm einbezieht, das skriptfähig ist und wobei das Bewirken der Erstellung eines Bildknopfes Generieren eines Skriptes einbezieht, um das grafische Anwendungsprogramm zu instruieren, den Bildknopf zu generieren basierend auf gegebenen Parametern.

3. Verfahren nach Anspruch 2, wobei die gegebenen Parameter die Vorlage und die Bildtextelemente enthalten.

4. Verfahren nach mindestens einem der vorangehenden Ansprüche, enthaltend Generieren einer Eingabedatei, die mindestens ein Bildtextelement enthält.

**5.** Verfahren nach Anspruch 4, wobei die Eingabedatei ferner mindestens eines aus der Gruppe enthält, bestehend aus:

- einem Sprachen-ID;
- einem Namen einer Bildknopfdatei, die zu erstellen ist.

**6.** Verfahren nach mindestens einem der Ansprüche 4 und 5, wobei das grafische Anwendungsprogramm mit dem Skript auf einem entfernten Server gestartet wird und mit dem Namen der Eingabedatei und Bildknopfinformation versehen wird.

**7.** Verfahren nach mindestens einem der vorangehenden Ansprüche, wobei die Bildknopfinformation Information in Bezug auf mindestens ein Element der Gruppe enthält, bestehend aus:

- Bildknopfgröße;
- Bildknopfform;
- Farbe; und
- Position eines Textelementes.

**8.** Verfahren nach mindestens einem der vorangehenden Ansprüche, einschließend Generieren eines leeren Bildknopfes basierend auf der Vorlage und Vereinigen des Übersetzungstextelementes in den leeren Bildknopf.

**9.** Verfahren nach mindestens einem der vorangehenden Ansprüche, wobei die Textelementdatei Information über einen Ausgabedateinamen des Bildknopfes und Information über eine Vorlage, die für eine Bildknopferstellung erforderlich ist, enthält.

**10.** Verfahren nach mindestens einem der vorangehenden Ansprüche, wobei Sammeln von Bildtextelementen enthält Extrahieren von Textelementen aus mindestens einer Bilderstellungsdatei, die Positionsinformation und Bildtextelemente einer Vielzahl von Bildknöpfen in einer ersten Sprachen enthält; und wobei die Bildtextelemente in der zweiten Sprache in eine Bilderstellungsdatei für die zweite Sprache vereinigt werden.

**11.** Verfahren nach mindestens einem der vorangehenden Ansprüche, wobei Erhalten übersetzter Bildtextelemente Extrahieren relevanter Information aus der Textelementdatei und Importieren der Information in eine Datenbank enthält.

**12.** Verfahren nach mindestens einem der vorangehenden Ansprüche, wobei Erhalten der übersetzten Bildtextelemente Verwenden eines web-basierten Werkzeugs einbezieht.

**13.** Verfahren nach mindestens einem der vorangehenden Ansprüche, wobei die Textelementdatei durch eine XML-Datei gebildet wird und wobei Generieren der übersetzten Bildtextelemente einen XML-Editor einbezieht.

**14.** Verfahren nach mindestens einem der vorangehenden Ansprüche, enthaltend Vereinigen der übersetzten Bildtextelemente in die Textelementdatei.

**15.** Ein Programm mit Instruktionen, die angepasst sind, Datenverarbeitungsmittel zu veranlassen, das Verfahren nach mindestens einem der Ansprüche 1 - 14 auszuführen.

**16.** Ein computerlesbares Medium, in dem ein Programm verkörpert ist, wobei das Programm dazu dient, einen Computer zu veranlassen, das Verfahren nach mindestens einem der Ansprüche 1 - 14 auszuführen.

**17.** Ein Computerprogrammprodukt, umfassend das computerlesbare Medium nach Anspruch 16.

**18.** Datenverarbeitungseinheit zum Vorsehen von Bildknöpfen in einer Vielzahl von Sprachen, enthaltend
Sammelmittel (101) zum Sammeln von Bildtextelementen einer Vielzahl von Bildknöpfen in einer ersten Sprache in einer Textelementdatei;
Übersetzungsmittel (102) zum Erhalten übersetzter Bildtextelemente für die Textelementdatei in mindestens einer zweiten Sprache;
Bildparametermittel (103) zum Erhalten von Bildknopfinformation von einer Vorlage; und
Grafikbefehlsmittel (104) zum Bewirken einer Erstellung eines Bildknopfes für mindestens eines der Textelemente in der ersten und zweiten Sprache.

**19.** Datenverarbeitungseinheit nach Anspruch 18, wobei das Grafikbefehlsmittel (104) angepasst ist, ein Skript zu generieren, um ein grafisches Anwendungsprogramm zu instruieren, den Bildknopf zu generieren basierend auf gegebenen Parametern.

**20.** Datenverarbeitungseinheit nach Anspruch 19, wobei die gegebenen Parameter die Vorlage und die Bildtextelemente enthalten.

**21.** Datenverarbeitungseinheit nach mindestens einem der Ansprüche 18 bis 20, wobei das Grafikbefehlsmittel (104) angepasst ist, einer Eingabedatei zu generieren, die mindestens ein Bildtextelement enthält.

**22.** Datenverarbeitungseinheit nach Anspruch 21, wobei die Eingabedatei ferner mindestens eines aus der Gruppe enthält, bestehend aus:

- einem Sprachen-ID; und
- einem Namen einer Bildknopfdatei, die zu erstellen ist.

**23.** Datenverarbeitungseinheit nach mindestens einem der Ansprüche 21 und 22, wobei das Grafikbefehlsmittel (104) angepasst ist, das grafische Anwendungsprogramm mit dem Skript auf einem entfernten Server zu starten und das grafische Anwendungsprogramm mit dem Namen der Eingabedatei und Bildknopfinformation zu versehen.

**24.** Datenverarbeitungseinheit nach mindestens einem der Ansprüche 18 bis 23, wobei die Bildknopfinformation Information in Bezug auf mindestens ein Element der Gruppe enthält, bestehend aus:

- Bildknopfgröße;
- Bildknopfform;
- Farbe; und
- Position eines Textelementes.

**25.** Datenverarbeitungseinheit nach mindestens einem der Ansprüche 18 bis 24, wobei das Grafikbefehlsmittel (104) angepasst ist, Generierung eines leeren Bildknopfes basierend auf der Vorlage und Vereinigen des Übersetzungstextelementes in den leeren Bildknopf zu bewirken.

**26.** Datenverarbeitungseinheit nach mindestens einem der Ansprüche 18 bis 25, wobei die Textelementdatei Information über einen Ausgabedateinamen des Bildknopfes und Information über eine Vorlage, die für eine Bildknopferstellung erforderlich ist, enthält.

**27.** Datenverarbeitung eine nach mindestens einem der Ansprüche 18 bis 26, wobei das Sammelmittel (101) angepasst ist, Textelemente aus mindestens einer Bilderstellungsdatei zu extrahieren, die Positionsinformation und Bildtextelemente einer Vielzahl von Bildknöpfen in einer ersten Sprache enthält, und die Bildtextelemente in der zweiten Sprache in eine Bilderstellungsdatei für die zweite Sprache zu vereinigen.

**28.** Datenverarbeitungseinheit nach mindestens einem der Ansprüche 18 bis 27, wobei das Übersetzungsmittel (102) angepasst ist, relevante Information aus der Textelementdatei zu extrahieren und die Information in eine Datenbank zu importieren.

**29.** Datenverarbeitungseinheit nach mindestens einem der Ansprüche 18 bis 28, wobei das Übersetzungsmittel (102) angepasst ist, ein web-basiertes Übersetzungswerkzeug aufzurufen.

**30.** Datenverarbeitungseinheit nach mindestens einem der Ansprüche 18 bis 29, wobei die Textelementdatei durch eine XML-Datei gebildet wird und einen XML-Editor zum Generieren übersetzter Bildtextelemente enthält.

**31.** Datenverarbeitungseinheit nach mindestens einem der Ansprüche 18 bis 30, wobei das Sammelmittel (101) angepasst ist, die übersetzten Bildtextelemente in die Textelementdatei zu vereinigen.

**Revendications**

**1.** Procédé destiné à procurer des boutons d'image dans une pluralité de langues, le procédé utilisant un moyen de traitement de données comprenant les étapes consistant à

recueillir des éléments de texte d'image d'une pluralité de boutons d'image dans une première langue dans un fichier d'éléments de texte,

obtenir les éléments de texte d'image traduits pour le fichier d'éléments de texte dans au moins une seconde langue,

obtenir les informations de bouton d'image à partir d'un gabarit, et

effectuer la création d'un bouton d'image pour au moins l'un des éléments de texte dans les première et seconde langues.

2. Procédé selon la revendication 1, dans lequel la réalisation de la création d'un bouton d'image comprend un programme d'application graphique qui est validé par une séquence type et dans lequel la réalisation de la création d'un bouton d'image comprend la génération d'une séquence type afin de donner pour instruction au programme d'application graphique de générer le bouton d'image sur la base des paramètres donnés.

3. Procédé selon la revendication 2, dans lequel les paramètres donnés comprennent le gabarit et les éléments de texte d'image.

4. Procédé selon au moins l'une des revendications précédentes, comprenant la génération d'un fichier d'entrée comprenant au moins un élément de texte d'image.

5. Procédé selon la revendication 4, dans lequel le fichier d'entrée comprend en outre au moins l'un du groupe constitué de :

- un identificateur de langue, et
- un nom d'un fichier de bouton d'image à créer.

6. Procédé selon au moins l'une des revendications 4 et 5, dans lequel le programme d'application graphique est lancé avec la séquence type sur un serveur éloigné et est muni du nom du fichier d'entrée et des informations de bouton d'image.

7. Procédé selon au moins l'une des revendications précédentes, dans lequel les informations de bouton d'image comprennent des informations associées à au moins un élément du groupe constitué de :

- la taille du bouton d'image,
- la forme du bouton d'image,
- la couleur, et
- la position d'un élément de texte.

8. Procédé selon au moins l'une des revendications précédentes, comprenant la génération d'un bouton d'image vide sur la base du gabarit et la fusion de l'élément de texte de traduction dans le bouton d'image vide.

9. Procédé selon au moins l'une des revendications précédentes, dans lequel le fichier d'éléments de texte comprend des informations sur un nom de fichier de sortie du bouton d'image et des informations sur un gabarit requis pour une création de bouton d'image.

10. Procédé selon au moins l'une des revendications précédentes, dans lequel le recueil d'éléments de texte d'image comprend l'extraction d'éléments de texte d'au moins un fichier de création d'image comprenant des informations de position et des éléments de texte d'image d'une pluralité de boutons d'image dans une première langue, et dans lequel les éléments de texte d'image dans la seconde langue sont fusionnés dans un fichier de création d'image pour la seconde langue.

11. Procédé selon au moins l'une des revendications précédentes, dans lequel l'obtention d'éléments de texte d'image traduits comprend l'extraction d'informations pertinentes du fichier d'éléments de texte et l'importation des informations dans une base de données.

12. Procédé selon au moins l'une des revendications précédentes, dans lequel l'obtention des éléments de texte d'image traduits comprend l'utilisation d'un outil basé sur le réseau Web.

13. Procédé selon au moins l'une des revendications précédentes, dans lequel le fichier d'éléments de texte est constitué par un fichier en langage XML et dans lequel la génération des éléments de texte d'image traduits comprend un éditeur de langage XML.

14. Procédé selon au moins l'une des revendications précédentes, comprenant la fusion des éléments de textes d'image traduits dans le fichier d'éléments de texte.

15. Procédé comportant des instructions conçues pour amener le moyen de traitement de données à exécuter le procédé conforme à au moins l'une des revendications 1 à 14.

16. Support pouvant être lu par un ordinateur, dans lequel un programme est incorporé, où le programme consiste à amener un ordinateur à exécuter le procédé conforme à au moins l'une des revendications 1 à 14.

17. Produit de programme informatique comprenant le support pouvant être lu par un ordinateur conforme à la revendication 16.

18. Unité de traitement de données destinée à fournir des boutons d'image dans une pluralité de langues, comprenant un moyen de recueil (101) destiné à recueillir des éléments de texte d'image d'une pluralité de boutons d'image dans une première langue dans un fichier d'éléments de texte,
un moyen de traduction (102) destiné à obtenir des éléments de texte d'image traduits pour le fichier d'éléments de texte dans au moins une seconde langue,
un moyen de paramètre d'image (103) destiné à obtenir des informations de bouton d'image à partir d'un gabarit, et
un moyen d'instruction de graphique (104) destiné à effectuer la création d'un bouton d'image pour au moins l'un des éléments de texte dans les première et seconde langues.

19. Unité de traitement de données selon la revendication 18, dans laquelle le moyen d'instruction de graphique (104) est conçu pour générer une séquence type afin de donner pour instruction à un programme d'application graphique de générer le bouton d'image sur la base des paramètres donnés.

20. Unité de traitement de données selon la revendication 19, dans laquelle les paramètres donnés comprennent le gabarit et les éléments de texte d'image.

21. Unité de traitement de données selon au moins l'une des revendications 18 à 20, dans laquelle le moyen d'instruction de graphique (104) est conçu pour générer un fichier d'entrée comprenant au moins un élément de texte d'image.

22. Unité de traitement de données selon la revendication 21, dans laquelle le fichier d'entrée comprend en outre au moins l'un du groupe constitué de :

- un identificateur de langue, et
- un nom d'un fichier de bouton d'image à créer.

23. Unité de traitement de données selon au moins l'une des revendications 21 et 22, dans laquelle le moyen d'instruction de graphique (104) est conçu pour lancer le programme d'application graphique avec la séquence type sur un serveur éloigné et pour fournir au programme d'application graphique le nom du fichier d'entrée et les informations de bouton d'image.

24. Unité de traitement de données selon au moins l'une des revendications 18 à 23, dans laquelle les informations de bouton d'image comprennent les informations associées à au moins un élément du groupe constitué de :

- une taille de bouton d'image,
- une forme de bouton d'image,
- une couleur, et
- une position d'un élément de texte.

25. Unité de traitement de données selon au moins l'une des revendications 18 à 24, dans laquelle le moyen d'instruction de graphique (104) est conçu pour effectuer une génération d'un bouton d'image vide sur la base du gabarit et fusionner l'élément de texte de traduction dans le bouton d'image vide.

26. Unité de traitement de données selon au moins l'une des revendications 18 à 25, dans laquelle le fichier d'éléments de texte comprend des informations sur un nom de fichier de sortie du bouton d'image est des informations sur un gabarit requis pour une création de bouton d'image.

27. Unité de traitement de données selon au moins l'une des revendications 18 à 26, dans laquelle le moyen de recueil (101) est conçu pour extraire des éléments de texte d'au moins un fichier de création d'image comprenant des informations de position et des éléments de texte d'image d'une pluralité de boutons d'image dans une première langue, et pour fusionner les éléments de texte d'image dans la seconde langue dans un fichier de création d'image pour la seconde langue.

28. Unité de traitement de données selon au moins l'une des revendications 18 à 27, dans laquelle le moyen de traduction (102) est conçu pour extraire des informations pertinentes du fichier d'éléments de texte et pour importer les informations dans une base de données.

29. Unité de traitement de données selon au moins l'une des revendications 18 à 28, dans laquelle le moyen de traduction (102) est conçu pour appeler un outil de traduction basé sur le réseau Web.

30. Unité de traitement de données selon au moins l'une des revendications 18 à 29, dans laquelle le fichier d'éléments de texte est constitué par un fichier en langage XML et comprend un éditeur de langage XML pour générer des éléments de texte d'image traduits.

31. Unité de traitement de données selon au moins l'une des revendications 18 à 30, dans laquelle le moyen de recueil (101) est conçu pour fusionner les éléments de texte d'image traduits dans le fichier d'éléments de texte.

TRANSLATION
SERVICE — 120

100

101 102 103 104

COLLECT

TEXT
ELEMENT FILE — 110

TEMPLATE — 130

GRAPHICS
APPLICATION
PROGRAM — 140

"SYSTEM DEFAULTS" — 141

"SYSTEMEINSTELLUNGEN" — 142

# Fig. 1

COLLECT IMAGE TEXT ELEMENTS OF A
PLURALITY OF IMAGE BUTTONS IN A
FIRST LANGUAGE IN A TEXT ELEMENT
FILE — 201

OBTAIN TRANSLATED IMAGE TEXT
ELEMENTS FOR THE TEXT ELEMENT FILE
IN AT LEAST ONE SECOND LANGUAGE — 202

OBTAIN IMAGE BUTTON INFORMATION
FROM A TEMPLATE — 203

EFFECT CREATION OF IMAGE BUTTON
FOR AT LEAST ONE TEXT ELEMENT FOR
AT LEAST ONE LANGUAGE FROM FROM
THE TEXT ELEMENT FILE — 204

# Fig. 2

GENERATE INPUT FILE
INCLUDING
-AT LEAST ONE IMAGE TEXT
ELEMENT
- A LANGUAGE ID
- A NAME OF AN IMAGE BUTTON
FILE TO CREATE
301

OBTAIN IMAGE BUTTON
INFORMATION
302

INSTRUCT GRAPHIC APPLICATION
PROGRAM USING A SCRIPT
INCLUDING INPUT FILE AND
IMAGE BUTTON INFORMATION
303

GENERATE EMPTY IMAGE BUTTON
BASED ON IMAGE BUTTON
INFORMATION
306

GENERATE IMAGE BUTTON BASED ON
IMAGE BUTTON INFORMATION AND
TRANSLATION TEXT ELEMENT.
304

MERGE THE TRANSLATION TEXT
ELEMENT INTO THE EMPTY IMAGE
BUTTON
307

STORE IMAGE BUTTON USING IMAGE
BUTTON FILE NAME
305

# Fig. 3

TRANSFER IMAGE TEXT ELEMENTS INTO
XML TEXT FILE OR DATABASE
401

OBTAIN TRANSLATED IMAGE TEXT
ELEMENTS USING A WEB-BASED TOOL
OR A XML EDITOR
402

MERGE THE TRANSLATED IMAGE TEXT
ELEMENTS INTO THE TEXT FILE OR
DATABASE
403

GENERATE IMAGE BUTTONS WITH THE
TRANSLATED IMAGE TEXT ELEMENTS
404

# Fig. 4

Fig. 5

```
                                    ┌─────────────────┐
                                    │ IMAGE CREATION  │  602
                                    │      FILE       │
                                    └─────────────────┘
   ┌─────────────────┐                       │
   │  INPUT TEXT     │  601          ┌─────────────────┐
   │  ELEMENTS IN    │              │  EXTRACT TEXT   │  603
   │ FIRST LANGUAGE  │              │  ELEMENTS IN    │
   └─────────────────┘              │ FIRST LANGUAGE  │
            │                       └─────────────────┘
            │                                │
            └───────────────┬────────────────┘
                            │
              ┌─────────────────────────────┐
              │ TEXT ELEMENT FILE WITH TEXT  │  604
              │          ELEMENTS            │
              └─────────────────────────────┘
                            │
                 ┌─────────────────────┐
                 │  TRANSFER TEXT      │  605
                 │  ELEMENTS INTO      │
                 │    DATABASE         │
                 └─────────────────────┘
                            │
          ┌ ─ ─ ─ ─ ─ ─ ─ ─ ┼ ─ ─ ─ ─ ─ ┐  606
          │        ┌─────────────────────┐
          │        │ TRANSLATION SERVICE │  606a
          │        └─────────────────────┘
          │                 │
          │    ┌─────────────────────────┐
          │    │  TRANSFER TEXT ELEMENTS │  606b
          │    │ IN SECOND LANGUAGE INTO │
          │    │        DATABASE         │
          │    └─────────────────────────┘
          └ ─ ─ ─ ─ ─ ─ ─ ─ ┼ ─ ─ ─ ─ ─ ┘
                            │
             ┌─────────────────────────────┐
             │ MERGE TEXT ELEMENTS IN SECOND│  607
             │LANGUAGE INTO TEXT ELEMENT FILE│
             └─────────────────────────────┘
                            │
                 ┌─────────────────────┐
                 │   OBTAIN TEMPLATE   │  608
                 └─────────────────────┘
                            │
                 ┌─────────────────────┐
                 │  CREATE AT LEAST ONE│  609
                 │ IMAGE BUTTON CREATION│
                 │       SCRIPT        │
                 └─────────────────────┘
                            │
                 ┌─────────────────────┐
                 │ CREATE IMAGE BUTTON IN│  610
                 │   SECOND LANGUAGE    │
                 └─────────────────────┘
                            │
                 ┌─────────────────────┐
                 │    STORE IMAGE      │  611
                 │      BUTTON         │
                 └─────────────────────┘
```

# Fig. 6

Fig. 7

Extracting text elements from a source code of a software

Searching untranslated elements of said extracted text elements

data-base

Retrieving translation elements for each untranslated text element

associating said untranslated text elements of said source code with said retrieved translation elements

**Fig. 8a**

source code

component for extracting

component for searching

component for retrieving

data-base

component for associating

**Fig. 8b**

Fig. 9

searching untranslated text elements in the
software related text  ～2

retrieving translation elements for each
untranslated text element  ～4

data-
base  ～6

associating said untranslated text
elements of said software related text
with said retrieved translation elements  ～8

～10

## Fig. 10a

software
related
text  ～610

～602
component for
searching

～600

～604
component for
retrieving

data-
base  ～6

～606
component for
associating

## Fig. 10b

Fig. 11

110, 130

116

Validating a translation
element as a matching
translation of a text
element by user input

Generating a preliminary ID number
for the text element and its validated
matching translation element

200

112, 132

202

Transferring said identified text and
translation element pair to said
database 150

204

Analyzing said text and translation
element pair to generate a new key
ID

206

Storing said element pair with said
newly generated key ID

# Fig. 12

| Key-ID | Language | Text | Synonym |
|--------|----------|------|---------|
| 1 | 1 | table | desk |
| 1 | 49 | Tisch | Schreibtisch |
| 2 | 1 | table | chart |
| 2 | 49 | Tabelle | Verzeichnis |
| 3 | 1 | table | board |
| 3 | 49 | Tafel | Brett |
| 4 | 1 | table | plain (geol.) |
| 4 | 49 | Plateau | Ebene |
| 5 | 1 | table | (opt.) |
| 5 | 49 | Bildebene | (opt.) |

# Fig. 13

| Key-ID | Language | Text | Status / Quality |
|--------|----------|------|------------------|
| 1 | 1 | The computer is standing on the table. | Untranslated |
| 1 | 1 | The computer is standing on the table. | 100% |
| 1 | 1 | The computer is standing on the table ? | 97% |
| 1 | 1 | ☑ computer is standing on the table. | 95% |
| 1 | 1 | ☑ computer is standing on ☑ table. | 84% |

40

Selecting the bold lined table element by user input.

| Key-ID | Language | Text | Status |
|--------|----------|------|--------|
| 1 | 1 | The computer is standing on the table. | Untranslated |
| 1 | 1 | The computer is standing on the table. | 100% |
| 1 | 49 | Der Computer steht auf dem Tisch. | 100% |

42

Selecting the bold lined table element by user input.

| Key-ID | Language | Text | Status |
|--------|----------|------|--------|
| 1 | 49 | Der Computer steht auf dem Tisch. | Fully translated |

44

# Fig. 14a

| user | computer | database |
|---|---|---|

S1 — untranslated text language 1

retrieving → S3 related elements (language 1)

S5 — preparing list and entries ← receiving

S7 — selecting of an entry → S6 — showing list of related elements

retrieving → S9 — selected item related element (language 49)

S11 — preparing list and entries ← receiving

S13 — selecting of an entry → S12 — showing list of related element

S14 — translated text

time

**Fig. 14b**

| Key-ID | Language | Text | Status / Quality |
|---|---|---|---|
| 1 | 1 | The computer is standing on the table. | Untranslated |
| 1 | 1 | *A keyboard* is standing on the table. | 66% |
| 1 | 1 | *There is a keyboard* standing on the table? | 61% |

Selecting the bold lined table element by user input.

| Key-ID | Language | Text | Status |
|---|---|---|---|
| 1 | ˙˙ 1 | The computer is standing on the table. | Untranslated |
| 1 | 1 | *A keyboard* is standing on the table. | 66% |
| 1 | 49 | *Eine Tastatur* steht auf dem Tisch. | 66% |

Editing the suggested translation by user input.

| Key-ID | Language | Text | Status |
|---|---|---|---|
| 1 | - | *THE COMPUTER* steht auf dem Tisch. | Partially Translated 66% |

Selecting the dotted bold lined table element for next smaller text elements by user input.

| Key-ID | Language | Text | Status |
|---|---|---|---|
| 127 | - | *THE COMPUTER* steht auf dem Tisch. | Partially Translated 66% |
| 127 | 1 | The computer | 100% |
| 127 | 49 | Der Computer | 100% |

Accepting or editing the translation suggestion by user input

| Key-ID | Language | Text | Status |
|---|---|---|---|
| 1 | 49 | Der Computer steht auf dem Tisch. | Fully translated |

Transferring the new translations to the database

| Key-ID | Language | Text | Status |
|---|---|---|---|
| 114115 | 49 | Der Computer steht auf dem Tisch. | |
| 114115 | 1 | The computer is standing on the table. | |

# Fig. 15a

**Fig. 15b**

Fig. 16

Fig. 17

Fig. 18